# EUROPEAN PATENT APPLICATION

(11) **EP 3 467 761 A1**
(43) Date of publication of application: **10.04.2019**
(21) Application number: 18800025.1
(22) Date of filing: 18.01.2018
(51) Int. Cl.: G06Q 50/10, G06Q 50/30, G08G 1/123

(54) **HEARSE DISPATCH SERVER**

(30) Priority: 10.08.2017 JP 2017155528
(71) Applicant: Funeral Service Workers Academy, Inc., Utsunomiya-shi Tochigi 321-0162 (JP)
(72) Inventor: TAKADA Takayuki, Utsunomiya-shi Tochigi 321-0162 (JP)
(74) Representative: Appelt, Christian W.
(86) International application number: PCT/JP2018/001386
(87) International publication number: WO 2019/030944

(57) **Abstract**

To provide a first call vehicle server that provides an opportunity to select a desired mortuary and allows a user himself or herself to arrange a first call vehicle even when an emergency has occurred.

The first call vehicle dispatch server comprises a vehicle state storage means that stores a vehicle state representing whether a first call vehicle is available or not as vehicle state information 315, a facility state storage means that stores a facility state representing whether a mortuary is vacant or not as facility state information 316, a state display means 304 that transmits information regarding an available first call vehicle and information regarding a vacant mortuary to a user terminal based on the vehicle state information 315 and the facility state information 316, and displays the information on the user terminal, and a vehicle dispatch instruction means 306 that receives vehicle selection information that selects an available first call vehicle associated with the displayed vacant mortuary from the user terminal, and instructs a dispatch of the selected first call vehicle based on the vehicle selection information.

## Description

### [TECHNICAL FIELD]

The present invention relates to a dispatch instruction of a first call vehicle that transports a corpse to a mortuary, and especially relates to a first call vehicle dispatch server that displays locations of available vehicles near a loading point and vacant mortuaries in unloading points on a terminal of a user to instruct a dispatch that meets user's desire.

### [BACKGROUND ART]

Conventionally, the following taxi dispatch system has been known.

The taxi dispatch system ensures a quick taxi dispatch such that when a user uses a taxi while the user is out, a relay station is disposed between the taxi and the user, and the user requests the dispatch via the relay station with a mobile terminal (for example, see Patent Literature 1, Patent Literature 2, and Patent Literature 3).

A demand type vehicle dispatch system described in Patent Literature 1 periodically receives vehicle data composed of an office/vehicle code that identifies the vehicle managed per office, a vehicle location, and status data via the Internet per vehicle. The system searches and manages predicted arrival times of one or more vehicles located on an effective arrival route in an arbitrary distance range as a reservation available vehicle list of the user based on location data of the user transmitted from a Web-enabled mobile terminal, and makes an inquiry of availability to a vehicle selected from this list by the user. When there is no response within a given period, the system makes a similar inquiry to a next candidate vehicle and when there is an affirmative response, the system transmits that reservation is established to the user and the vehicle.

A taxi dispatch system described in Patent Literature 2 registers an office/vehicle code that identifies the taxi managed per office, and monitors a vehicle location and an available/occupied state per vehicle via a network. The system searches a taxi to be dispatched based on location information from a mobile terminal of the user, and transmits a vehicle dispatch instruction including current location information of the user to an on-board terminal in the searched taxi.

A vehicle dispatch system described in Patent Literature 3 includes on-board terminal identification means that identifies an on-board terminal of the vehicle, and receives location information and state information of the vehicle from the on-board terminal. The system searches an appropriate vehicle to be dispatched based on the location information received from a mobile terminal of the user, destination information, and personal identification number information by authentication means, and executes the vehicle dispatch instruction and requests a charge information transmission. When the system receives charge information transmitted in accordance with the request for charge information transmission after the vehicle arrives at the destination, the system executes a billing process for a deferred payment.

### [CITATION LIST]

### [PATENT LITERATURE]

Patent Literature 1: JP-A-2002-140795
Patent Literature 2: JP-A-2003-151083
Patent Literature 3: JP-A-2003-187388

### [SUMMERY OF INVENTION]

### [TECHNICAL PROBLEM]

However, the vehicle dispatch systems described in any of Patent Literatures 1, 2, and 3 are premised on the dispatch of the taxi.

Therefore, there is no system that provides information regarding the destination to the user.

Nowadays, it is said that 90% or more of places where a person dies is in a hospital.

After finished treating a corpse, the corpse is temporarily laid in a hospital morgue, and a first call vehicle will be inevitably arranged to transport the corpse.

When the corpse is transported from the hospital morgue, a place to lay the corpse has to be ensured.

Many bereaved families ask the nurse to request transport of the corpse to a funeral company that comes in and out the hospital without any preparation since it is sudden.

Then, in a limited period and without comparing the funeral company with other funeral companies, the bereaved families request arrangement of subsequent mortuary and funeral home chapel to this funeral company.

In view of this, there are voices that the funeral could not be performed at a desired schedule, in a desired funeral home chapel, or in a desired funeral style, and complaints such that the cost was higher than expectation.

The present invention has been made to solve such a problem, and the present invention is aimed to provide a first call vehicle dispatch server that provides an opportunity to select a desired mortuary and allows a user to arrange a first call vehicle even when an emergency has occurred by displaying locations of an available first call vehicle and a vacant mortuary on a user terminal.

### [SOLUTION TO PROBLEM]

A first call vehicle dispatch server according to claim 1 comprises a vehicle state storage means that stores a vehicle state representing whether a first call vehicle is available or not as vehicle state information; a facility state storage means that stores a facility state representing whether a mortuary is vacant or not as facility state information; a state display means that transmits information regarding an available first call vehicle and information regarding a vacant mortuary to a user terminal based on the vehicle state information and the facility state information, and displays the information regarding the available first call vehicle and the information regarding the vacant mortuary on the user terminal; and a vehicle dispatch instruction means that receives vehicle selection information that selects an available first call vehicle associated with the displayed vacant mortuary from the user terminal, and instructs a dispatch of the selected first call vehicle based on the vehicle selection information.

The first call vehicle dispatch server according to claim 2 further comprises a facility reservation means that receives facility selection information that selects a vacant mortuary associated with the first call vehicle instructed to be dispatched from the user terminal, and reserves the selected vacant mortuary based on the facility selection information.

This ensures a desired mortuary from the displayed vacant mortuaries.

In the first call vehicle dispatch server according to claim 3, the state display means displays the information regarding the available first call vehicle and the information regarding the vacant mortuary on a map on a screen of the user terminal.

This allows the user to easily know locations of the vehicles and the offices.

In the first call vehicle dispatch server according to claim 4, the facility reservation means receives facility temporal selection information that temporarily selects a vacant mortuary from the user terminal, and displays facility state information representing whether a funeral home chapel owned by a company of the temporarily selected mortuary is vacant or not on the user terminal based on the facility temporary selection information.

When the user knows that the mortuary and the funeral home chapel of the identical company are both vacant, the user can smoothly proceed the subsequent funeral schedule.

In the first call vehicle dispatch server according to claim 5, the facility reservation means includes facility reservation status display means that displays a reservation status of the funeral home chapel owned by the company of the temporarily selected mortuary on the user terminal based on the facility temporary selection information.

Since the user can know the reservation status of the funeral home chapel of the company identical to that of the vacant mortuary, the user can expect the number of days to lay the corpse in the mortuary and the subsequent funeral schedule.

In the first call vehicle dispatch server according to claim 6, the facility reservation means reserves, when the facility reservation means receives temporal selection information that temporarily selects a vacant funeral home chapel displayed by the facility reservation status display means and further receives selection information for the temporarily selected mortuary, both the temporarily selected vacant funeral home chapel and the mortuary for which the selection information has been received.

The user can confirm the funeral schedule.

In the first call vehicle dispatch server according to claim 7, the vehicle dispatch instruction means includes a vehicle dispatch information display means that receives vehicle temporal selection information that temporarily selects an available first call vehicle from the user terminal, and displays vehicle dispatch information representing a first estimated fare from a location of a company of the temporarily selected first call vehicle to a request point and a second estimated fare from the request point to the temporarily selected vacant mortuary for the temporarily selected first call vehicle based on the vehicle temporary selection information.

By displaying it as the vehicle dispatch information, the user can know an estimated fare to pay.

Different from a taxi business that charges a fare from a pickup location or the request point to the destination, a funeral transport service licensed based on the Motor Truck Transportation Business Act, always also charges a fare from the location of the company of the first call vehicle to the request point.

In the first call vehicle dispatch server according to claim 8, the vehicle dispatch instruction means selects temporarily an available first call vehicle in which the sum of a first estimated fare from a location of a company of an available first call vehicle to a request point, and a second estimated fare from the request point to the selected vacant mortuary is minimum.

Since the user can know the minimum sum of an estimated fare for the vehicle dispatch and a location of the available first call vehicle, the user can arrange the available first call vehicle more quickly.

### [ADVANTAGEOUS EFFECTS OF INVENTION]

The present invention, including a vehicle state storage means that stores a vehicle state representing whether a first call vehicle is available or not as vehicle state information, a facility state storage means that stores a facility state representing whether a mortuary is vacant or not as facility state information, a state display means that transmits information regarding available first call vehicles and information regarding vacant mortuaries to a user terminal based on the vehicle state information and the facility state information, and displays those information on the user terminal, and a vehicle dispatch instruction means that receives vehicle selection information that selects an available first call vehicle associated with the displayed vacant mortuaries, and instructs a dispatch of the selected first call vehicle based on the vehicle selection information from the user terminal, the present invention can provide an opportunity to select a desired mortuary and make the user arrange the first call vehicle even in the emergency occasion.

### [BRIEF DESCRIPTION OF DRAWINGS]

Fig. 1 is a view illustrating an exemplary overall configuration of a first call vehicle dispatch system according to Embodiment 1 of the present invention.
Fig. 2 is a view illustrating an exemplary outline configuration of a first call vehicle dispatch server according to Embodiment 1 of the present invention.
Fig. 3 is a view illustrating an exemplary operational function of the first call vehicle dispatch system according to Embodiment 1 of the present invention.
Fig. 4 is a view illustrating an example of data formation in a storage unit of the first call vehicle dispatch server according to Embodiment 1 of the present invention.
Fig. 5 is a view illustrating exemplary various table configurations in the storage unit of the first call vehicle dispatch server according to Embodiment 1 of the present invention.
Fig. 6 is a flowchart illustrating the main procedure of the first call vehicle dispatch server according to Embodiment 1 of the present invention.
Fig. 7 is a flowchart illustrating a procedure to register management information of the first call vehicle dispatch server according to Embodiment 1 of the present invention.
Fig. 8 is a flowchart illustrating a state rewrite procedure of the first call vehicle dispatch server according to Embodiment 1 of the present invention.
Fig. 9 is a flowchart illustrating an overall procedure how the first call vehicle dispatch server serves a vehicle dispatch request from a user according to Embodiment 1 of the present invention.
Fig. 10 is a flowchart illustrating a procedure how the first call vehicle dispatch server displays vehicle and facility states according to Embodiment 1 of the present invention.
Fig. 11A and Fig. 11B are exemplary screens displayed on a user terminal and a company terminal according to Embodiment 1 of the present invention.
Fig. 12 is a flowchart illustrating a procedure of facility reservation of the first call vehicle dispatch server according to Embodiment 1 of the present invention.
Fig. 13 is an exemplary screen displaying a state when a destination has been temporarily selected on the user terminal according to Embodiment 1 of the present invention.
Fig. 14 is an exemplary screen displaying facility reservation confirmation information on the company terminal according to Embodiment 1 of the present invention.
Fig. 15 is a flowchart illustrating a procedure how the first call vehicle dispatch server displays vehicle dispatch information according to Embodiment 1 of the present invention.
Fig. 16 is an exemplary screen when a vehicle has been temporarily selected, which displays the vehicle dispatch information on the user terminal according to Embodiment 1 of the present invention.
Fig. 17 is an exemplary screen displaying vehicle dispatch confirmation information on the company terminal according to Embodiment 1 of the present invention.
Fig. 18 is a flowchart illustrating a procedure of fare settlement of the first call vehicle dispatch server according to Embodiment 1 of the present invention.
Fig. 19 is an exemplary screen displaying settlement information on the user terminal according to Embodiment 1 of the present invention.
Fig. 20 is a view illustrating an exemplary overall configuration of a first call vehicle dispatch system according to Embodiment 2 of the present invention.
Fig. 21 is a view illustrating an example of data formation in a storage unit of the first call vehicle dispatch server according to Embodiment 2 of the present invention.
Fig. 22 is a view illustrating exemplary various table configurations in the storage unit of the first call vehicle dispatch server according to Embodiment 2 of the present invention.
Fig. 23A and Fig. 23B are exemplary screens displayed on a user terminal and a company terminal according to Embodiment 2 of the present invention.
Fig. 24 is an exemplary screen displaying a state when a destination is temporarily selected on the user terminal according to Embodiment 2 of the present invention.
Fig. 25 is an exemplary screen displaying a facility reservation status of a funeral home chapel on the user terminal according to Embodiment 2 of the present invention.
Fig. 26 is an exemplary screen displaying facility reservation confirmation information on the company terminal according to Embodiment 2 of the present invention.

### [DESCRIPTION OF EMBODIMENTS]

The following describes modes for carrying out the invention in detail with reference to the attached drawings.

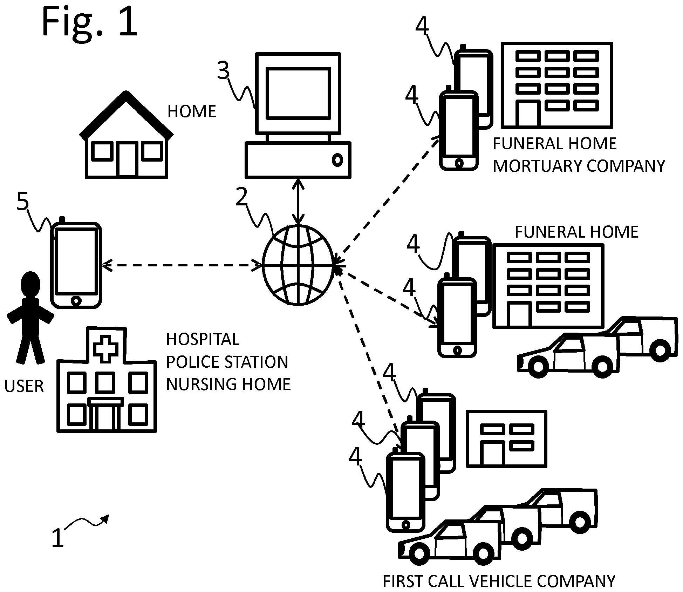

Fig. 1 to Fig. 26 are views to exemplify embodiments of the present invention.

In these views, parts to which identical reference numeral are attached represent an identical object, and basic configurations and performance are similar.

### [Embodiment 1]

Fig. 1 is a view illustrating an exemplary overall configuration of a first call vehicle dispatch system according to Embodiment 1 of the present invention.

A first call vehicle dispatch system 1 illustrated in Fig. 1 has a configuration where a first call vehicle dispatch server 3 is connected to a company terminal 4 and a user terminal 5 via the Internet 2.

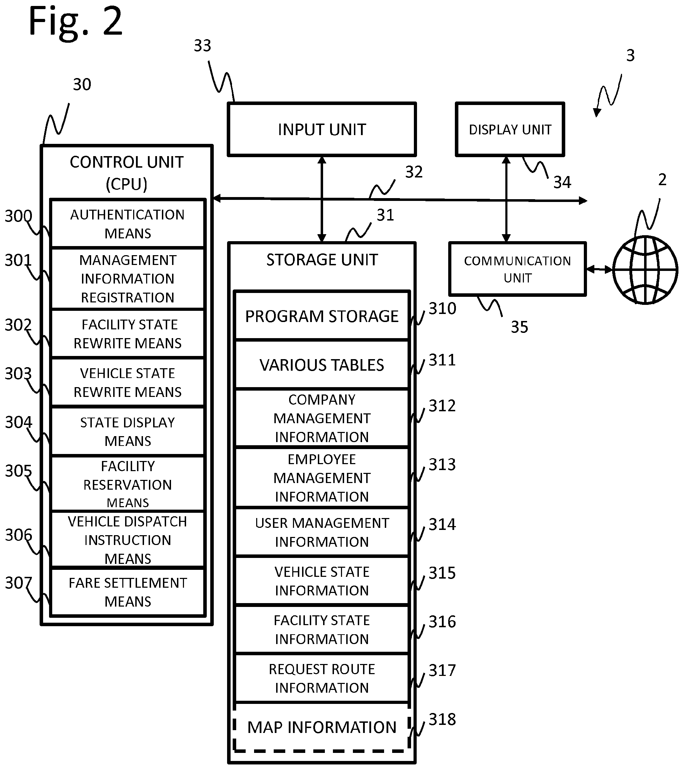

Fig. 2 is a view illustrating an exemplary outline configuration of the first call vehicle dispatch server according to Embodiment 1 of the present invention.

The first call vehicle dispatch server 3 illustrated in Fig. 2 comprises a control unit (CPU) 30 that integrally controls the whole system, a storage unit 31 that stores various kinds of information, an input unit 33 including a keyboard, a mouse, and the like, a display unit 34 such as a display, and a communication unit 35 connected to the Internet 2, and these are connected via bus lines 32.

The control unit (CPU) 30 ensures an authentication means 300, a management information registration means 301, a facility state rewrite means 302, a vehicle state rewrite means 303, a state display means 304, a facility reservation means 305, a vehicle dispatch instruction means 306, a fare settlement means 307, other various process means and determining means, by loading programs for an operating system or programs that specify a procedure of this first call vehicle dispatch system into ROM and RAM.

The storage unit 31 comprises a volatile or non-volatile semiconductor device such as RAM and ROM, or a secondary storage unit such as a hard disk or an optical disk.

The storage unit 31 includes a program storage 310, various tables 311, company management information 312, employee management information 313, user management information 314, vehicle state information 315, facility state information 316, request route information 317, and the like.

The storage unit 31 may include map information 318, or an external server (not illustrated) may include the map information 318.

The input unit 33 comprises a keyboard, a mouse, or a pointing device such as a trackball, and is used for, for example, maintenance of various tables or various kinds of information stored in the storage unit 31 or secondary input.

The display unit 34 is used for an administrator to display the various kinds of information for maintenance or secondarily input, and confirm various operating statuses of the first call vehicle dispatch server 3.

The communication unit 35 ensures exterior communication via the Internet 2, and is used, for example, for transmitting and receiving of information to/from the company terminal 4 and the user terminal 5 by wire or without wires using a protocol such as TCP/IP.

The authentication means 300 matches authentication information from an external terminal that requests connection through the communication unit 35 with authentication information stored in the company management information 312 or the user management information 314.

This authentication means 300 is needed for confidentiality of personal information and the like of a deceased, a bereaved family, and the like to be handled.

The management information registration means 301 stores management information regarding companies, employees of the companies and users, who have external terminals that connect through the communication unit 35, in the company management information 312, the employee management information 313 and the user management information 314 respectively.

The facility state rewrite means 302 receives a facility state whether a mortuary owned by the company is vacant or in use from the company terminal 4 connected through the communication unit 35, and stores the facility state in the facility state information 316.

The vehicle state rewrite means 303 receives a vehicle state whether a first call vehicle owned by the company is available or occupied from the company terminal 4 connected through the communication unit 35, and stores the vehicle state in the vehicle state information 315.

The state display means 304 transmits and displays the vehicle state stored in the vehicle state information 315 and the facility state stored in the facility state information 316 to the company terminal 4 or the user terminal 5 connected through the communication unit 35.

The facility reservation means 305 reserves a vacant mortuary by selection from the user terminal 5 connected through the communication unit 35.

The vehicle dispatch instruction means 306 instructs dispatch of an available first call vehicle by selection from the user terminal 5 connected through the communication unit 35.

The fare settlement means 307 transmits an actual travelled distance that has actually transported the corpse to a destination and an actual fare received from the company terminal 4 connected through the communication unit 35 to the user terminal 5 connected through the communication unit 35, and executes a billing process of fare settlement.

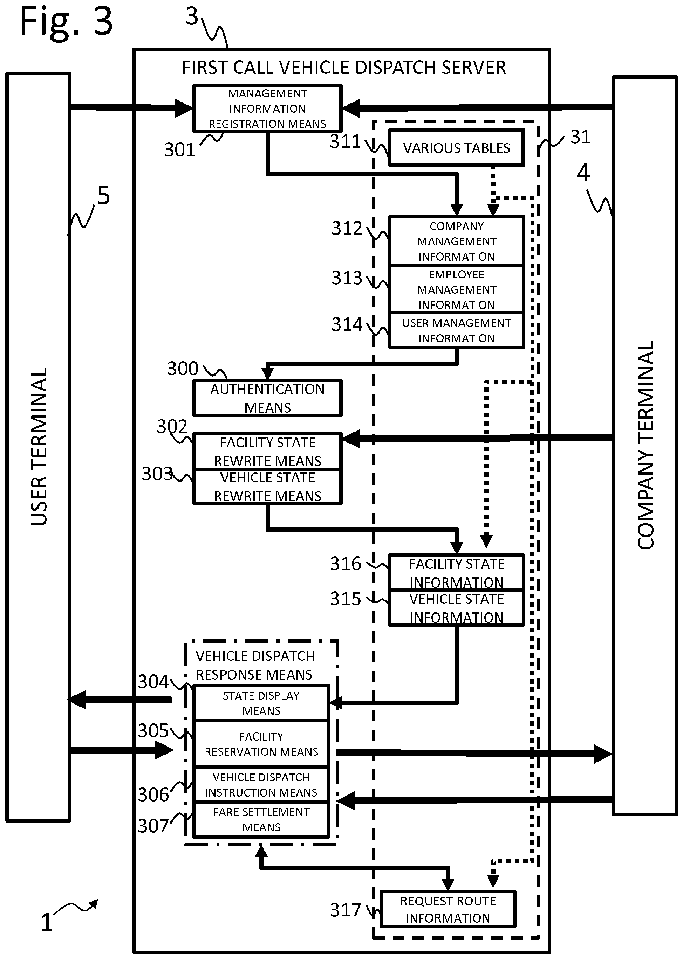

Fig. 3 is a view illustrating an exemplary operational function of the first call vehicle dispatch system according to Embodiment 1 of the present invention.

The first call vehicle dispatch server 3 registers the company management information 312, the employee management information 313, and the user management information 314 in the storage unit 31 by the management information registration means 301 when receiving connection request from the company terminal 4 or the user terminal 5 for the first time.

An identification code is assigned to the company management information 312, the employee management information 313, and the user management information 314 based on the various tables 311 from locations or addresses, and the types of companies or the user.

The first call vehicle dispatch server 3 matches using the authentication information of the company management information 312, the employee management information 313, and the user management information 314 that are stored in the storage unit 31 by the authentication means 300 when receiving the connection request from the company terminal 4 or the user terminal 5 from the second time or later.

After matching, the first call vehicle dispatch server 3 identifies whether it comes from the company terminal 4 or the user terminal 5 by the identification code, and executes the following process corresponding to each terminal.

When the first call vehicle dispatch server 3 receives from the company terminal 4 flag information representing a new facility state that the facility state of the mortuary has changed, the first call vehicle dispatch server 3 rewrites and updates the facility state information 316 stored in the storage unit 31 by the facility state rewrite means 302.

When the first call vehicle dispatch server 3 receives from the company terminal 4 flag information representing a new vehicle state that the vehicle state of the first call vehicle has changed, the first call vehicle dispatch server 3 rewrites and updates the vehicle state information 315 stored in the storage unit 31 by the vehicle state rewrite means 303.

The vehicle state information 315 and the facility state information 316 preliminarily store the identification code of the company who owns the vehicle or the facility.

When the first call vehicle dispatch server 3 receives a vehicle dispatch request from the user terminal 5, the first call vehicle dispatch server 3 executes vehicle dispatch response means.

The vehicle dispatch response means executes a sequential process comprising the state display means 304, the facility reservation means 305, the vehicle dispatch instruction means 306, and the fare settlement means 307.

The first call vehicle dispatch server 3 first stores a request point (a pickup location) received from the user terminal 5 as the request route information 317 in the storage unit 31.

Next, the first call vehicle dispatch server 3 transmits and displays information regarding available first call vehicles and vacant mortuaries in a request point area to the user terminal 5 by the state display means 304 based on the vehicle state information 315, the facility state information 316, the request route information 317, and the various tables 311 that are stored in the storage unit 31.

When the first call vehicle dispatch server 3 receives a reservation application of a mortuary from the user terminal 5 based on the displayed information, the first call vehicle dispatch server 3 transmits facility reservation information to the company terminal 4 by the facility reservation means 305.

The first call vehicle dispatch server 3 stores the destination based on the facility reservation information as the request route information 317 in the storage unit 31.

When the first call vehicle dispatch server 3 receives a dispatch application of a first call vehicle from the user terminal 5 based on the displayed information, the first call vehicle dispatch server 3 transmits vehicle dispatch instruction information to the company terminal 4 based on the request route information 317 stored in the storage unit 31 by the vehicle dispatch instruction means 306.

When the first call vehicle dispatch server 3 receives the actual fare from the company terminal 4 of the first call vehicle after transporting the corpse to the destination, the first call vehicle dispatch server 3 transmits the request route information 317 stored in the storage unit 31 and fare settlement information such as the actual fare received from the company terminal 4 to the user terminal 5 by the fare settlement means 307.

The following describes individual means and a specific configuration of the various kinds of information to be stored in detail.

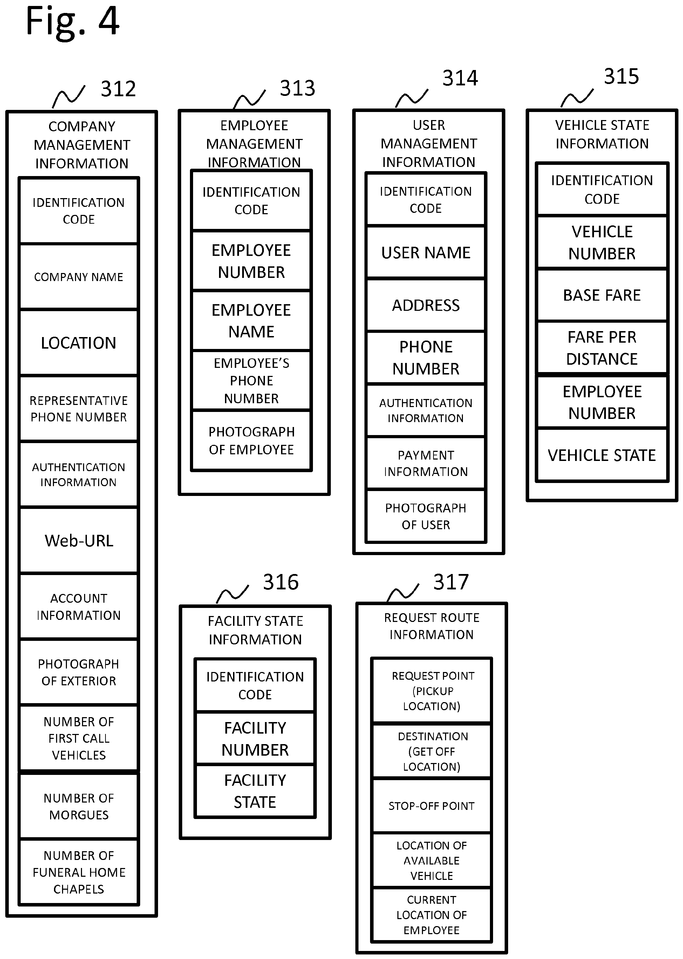

Fig. 4 is a view illustrating an example of data formation in the storage unit of the first call vehicle dispatch server according to Embodiment 1 of the present invention.

The company management information 312 holds information regarding funeral companies that owns funeral homes, mortuary companies, and first call vehicle companies, and specifically, holds respectively the identification code of the company, a company name, an address of the company, a representative phone number, authentication information to log in the first call vehicle dispatch server 3, a Web-URL of the company, account information for transfer, a photograph of exterior of the company, the number of the first call vehicles, the number of the morgues, and the number of the funeral home chapels that are owned by the company, and the like.

The employee management information 313 holds information regarding the employees of companies, and specifically, holds respectively the identification code of the company, an employee number, an employee name, an employee's phone number, a photograph of the employee, and the like.

The user management information 314 holds information regarding the users, and specifically, holds respectively the identification code of a user, the user name, an address, a phone number, the authentication information to log in the first call vehicle dispatch server 3, payment information such as a credit card paid by the user, a photograph of the user, and the like.

The vehicle state information 315 holds information regarding the first call vehicles owned by the funeral companies and the first call vehicle companies, and specifically, holds respectively the identification code of a company, a vehicle number of the first call vehicle, a base fare and an additional fare per distance, the employee number of the employee that drives the first call vehicle, the vehicle state representing whether the vehicle is available or occupied, and the like.

The facility state information 316 holds information regarding the funeral homes owned by the funeral companies and the mortuaries owned by the mortuary companies, and specifically, holds respectively the identification code of a company, a facility number of the mortuary, the facility state representing whether the facility is vacant or in use, and the like.

The request route information 317 holds information representing a transport route desired by the user, and specifically, holds the request point or a pickup location of the user, the destination or the mortuary where the corpse is laid, a stop-off point desired by the user such as a home, the location of an office of the first call vehicle selected by the user, a current location of the employee that drives the first call vehicle selected by the user, and the like.

The current location of the employee is for a case when the employee is away from the first call vehicle for driving.

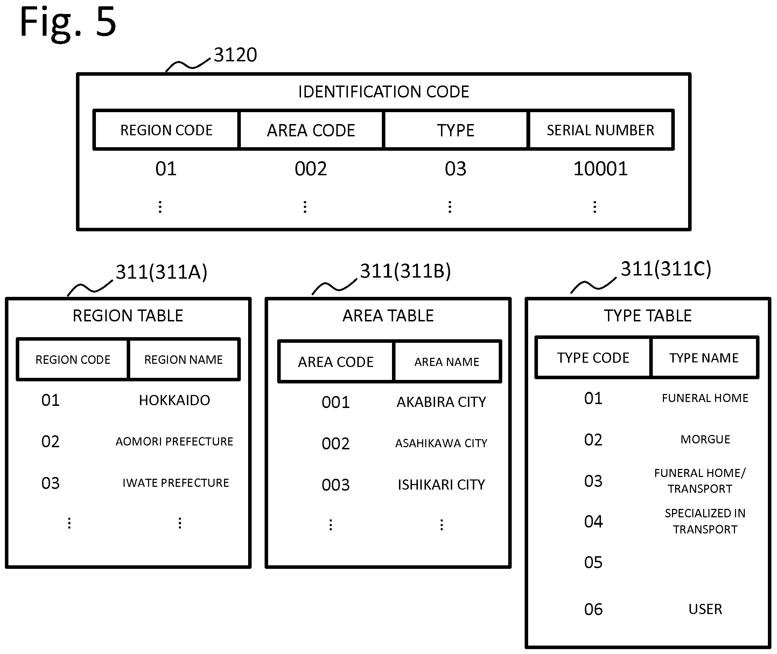

Fig. 5 is a view illustrating exemplary various table configurations in the storage unit of the first call vehicle dispatch server according to Embodiment 1 of the present invention.

Identification codes 3120 of the company and the user that have been already described in Fig. 4 are configured from, for example, 12-digit numbers including, for example, a two-digit region code, a three-digit area code, a two-digit type code, and, for example, a given five-digit serial number.

A region table 311A is configured from the region code and a region name.

For example, a region code "01" and a region name "HOKKAIDO" are stored in the region table 311A in a pair.

The region code is used to efficiently extract the companies throughout Japan for the dispatch request of the first call vehicle from the user.

The region code is also used to extract rough map information displayed on a screen of the user terminal 5.

An area table 311B is configured from the area code and an area name.

For example, an area code "002" and an area name "ASAHIKAWA" are stored in the area table 311B in a pair.

The company whose holding number of vehicles are less than five granted based on the Motor Truck Transportation Business Act is configured to perform only "transport of ones whose both a pickup location and a get off location belong to within its own business area."

Thus, the area code is equivalent to the business area of the company and is used to more efficiently extract the company with respect to the dispatch request of the first call vehicle from the user.

The area code is also used to extract detailed map information displayed on the screen of the user terminal 5.

A type table 311C is configured from the type code and a type name.

For example, a type code "03" and a type name "FUNERAL HOME/TRANSPORT" are stored in the type table 311C in a pair.

The type code is used for the company to identify the vehicle/facility provided to the user.

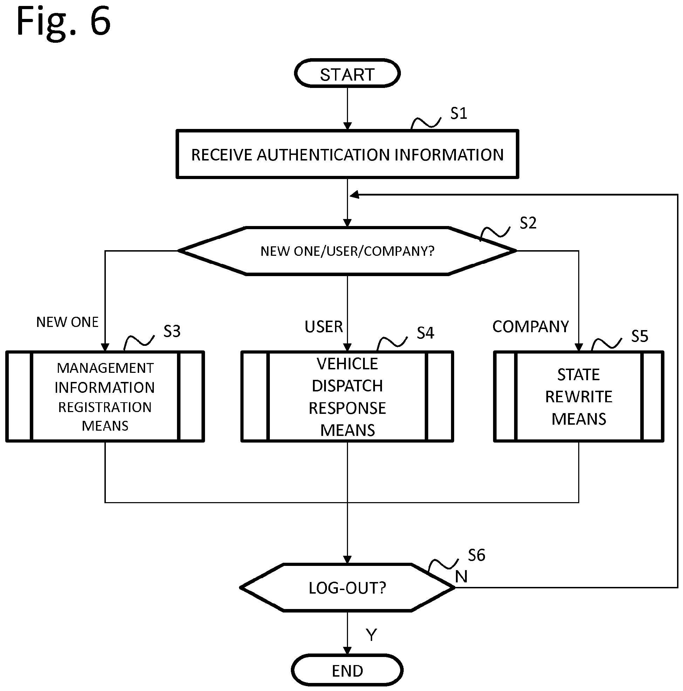

Subsequently, the following describes an operating procedure of the first call vehicle dispatch server 3 according to Embodiment 1 of the present invention configured as described above using Fig. 6 to Fig. 19.

Fig. 6 is a flowchart illustrating the main procedure of the first call vehicle dispatch server according to Embodiment 1 of the present invention.

In Step S1, the control unit (CPU) 30 receives the authentication information transmitted by the company terminal 4 or the user terminal 5 through the communication unit 35.

The authentication information may be, for example, a password with an alphanumeric character text, or a pattern image such as fingerprint information or retina information.

In Step S2, the control unit (CPU) 30 matches the received authentication information with the authentication information preliminarily registered in the company management information 312 or the user management information 314.

In response to the received authentication information not matching the authentication information preliminarily registered, the control unit (CPU) 30 determines that it is a connection from a new terminal, thus proceeding to Step S3.

In response to the received authentication information matching the authentication information preliminarily registered, the control unit (CPU) 30 determines whether the terminal to be connected is the company terminal 4 or the user terminal 5 by the identification code of matched management information.

For example, in the example of the identification code 3120 illustrated in Fig. 5, the control unit (CPU) 30 extracts the type code "03" from the sixth and seventh digits of an identification code "010020310001," and determines that it is a company by the corresponding type name "FUNERAL HOME/TRANSPORT" based on the type table 311C.

When the control unit (CPU) 30 determines that it is a company, the control unit (CPU) 30 proceeds to Step S5.

The control unit (CPU) 30 determines that it is a user when extracting a type code "06" by the identification code, thus proceeding to Step S4.

In Step S3, the control unit (CPU) 30 executes a subroutine process of the management information registration means 301 that registers the management information with respect to the new terminal.

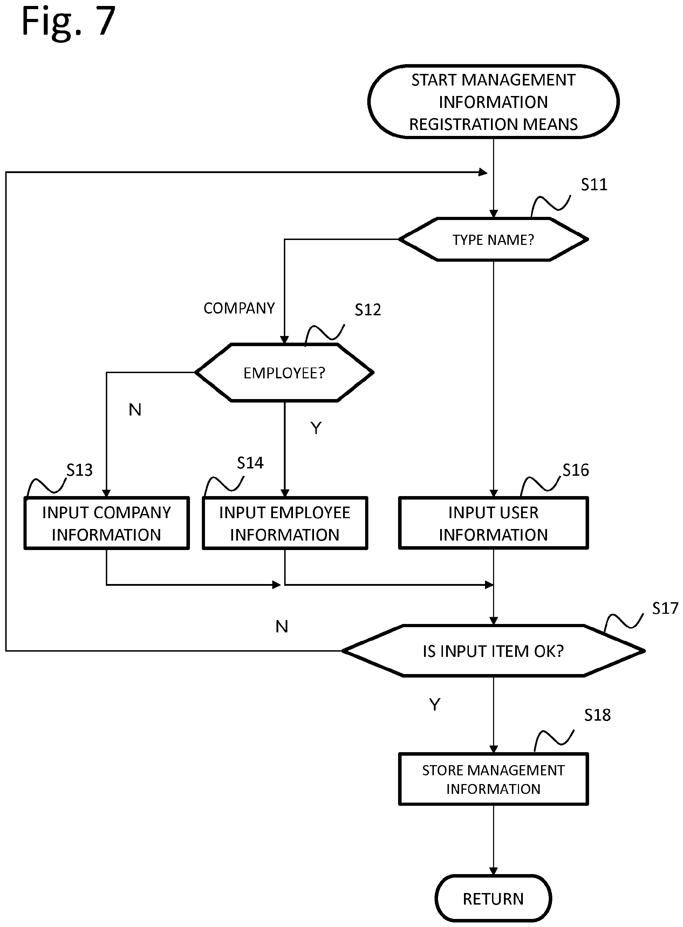

Specific means of the management information registration means 301 will be described later using Fig. 7.

The control unit (CPU) 30 returns after executing the subroutine process of the management information registration means 301, thus proceeding to Step S6.

In Step S4, the control unit (CPU) 30 executes the subroutine process of the vehicle dispatch response means in response to the selection of the available first call vehicle by the user terminal 5.

The specific vehicle dispatch response means is configured from the state display means 304, the facility reservation means 305, the vehicle dispatch instruction means 306, and the fare settlement means 307 as described above in Fig. 3.

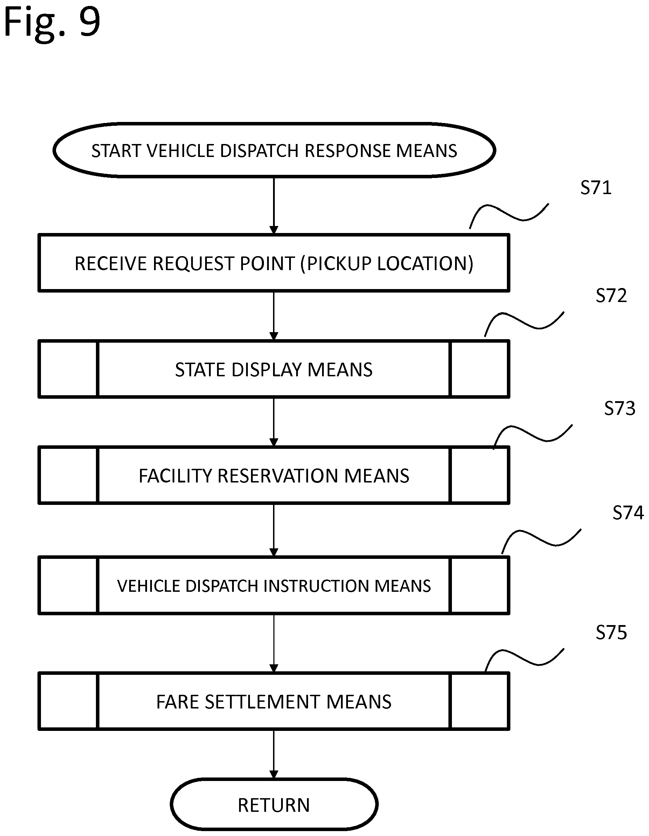

These specific procedures will be described later using Fig. 9 to Fig. 19.

The control unit (CPU) 30 returns after executing the subroutine process of the vehicle dispatch response means, thus proceeding to Step S6.

In Step S5, the control unit (CPU) 30 executes the subroutine process of the facility state rewrite means 302 or the vehicle state rewrite means 303 corresponding to the above-described type code, and updates the vehicle state information 315 or the facility state information 316.

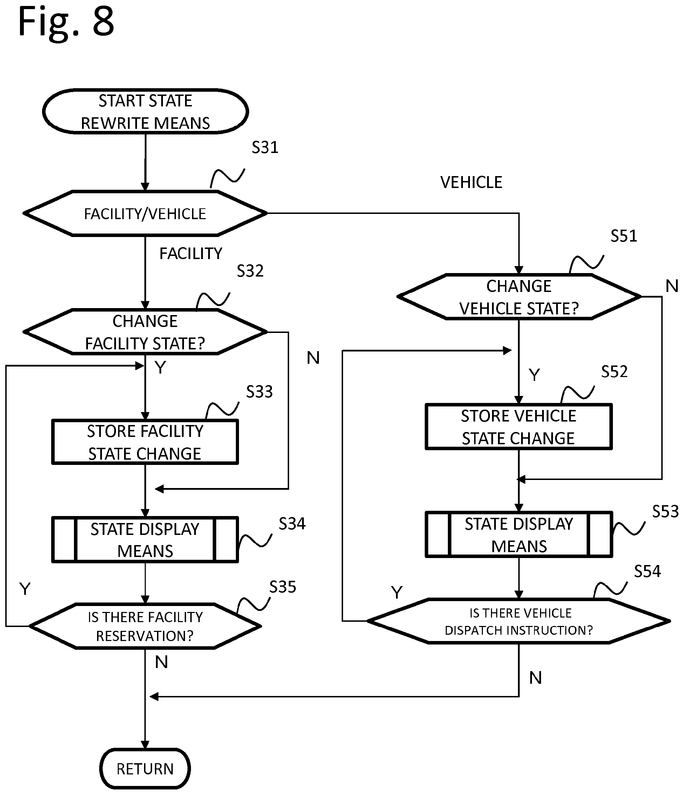

The specific procedure of the state rewrite means will be described later using Fig. 8.

The control unit (CPU) 30 returns after executing the subroutine process of the state rewrite means, thus proceeding to Step S6.

In Step S6, the control unit (CPU) 30 determines presence or absence of a log-out request from the connected company terminal 4 or user terminal 5.

The control unit (CPU) 30 returns to Step S2 when there is no log-out request from the terminal, and ends the connection with the terminal when there is the log-out request.

Fig. 7 is a flowchart illustrating a procedure to register the management information of the first call vehicle dispatch server according to Embodiment 1 of the present invention.

In Step S11, the control unit (CPU) 30 inquires of the new terminal to be connected about the type name.

Specifically, the control unit (CPU) 30, for example, displays the item of data shown in the type table 311C in Fig. 5 on a screen of the new terminal, and requests the new terminal to select the item of data.

For example, when the new terminal selects "USER," the control unit (CPU) 30 sets the type code "06" to proceed to Step S16.

When the new terminal selects "FUNERAL HOME," "MORGUE," "FUNERAL HOME/TRANSPORT," or "SPECIALIZED IN TRANSPORT," the control unit (CPU) 30 sets the type codes "01," "02," "03," or "04" respectively and determines that it is a company, thus proceeding to Step S12.

In Step S12, the control unit (CPU) 30 inquires of the new terminal about whether the new terminal inputs the employee information or not.

When a reception from the new terminal is "N," the control unit (CPU) 30 determines that company information will be inputted, thus proceeding to Step S13.

When the reception from the new terminal is "Y," the control unit (CPU) 30 determines that the employee information will be inputted, thus proceeding to Step S14.

In Step S13, the control unit (CPU) 30 requests the new terminal to input respective items of the company management information 312.

In Step S14, the control unit (CPU) 30 requests the new terminal to input respective items of the employee management information 313.

In Step S16, the control unit (CPU) 30 requests the new terminal to input respective items of the user management information 314.

In Step S17, the control unit (CPU) 30 inquires of the new terminal about whether the new terminal has inputted all the items to be stored in the corresponding management information or not.

When the reception from the new terminal is "Y," the control unit (CPU) 30 proceeds to Step S18.

When the reception from the new terminal is "N," the control unit (CPU) 30 returns to Step S11.

In Step S18, the control unit (CPU) 30 stores the input information as the company management information 312, the employee management information 313, or the user management information 314 in the storage unit 31.

Afterwards, the control unit (CPU) 30 returns to the main procedure in Fig. 6, thus proceeding to Step S6.

The following describes the specific procedure of the state rewrite means using Fig. 8.

Fig. 8 is a flowchart illustrating a state rewrite procedure of the first call vehicle dispatch server according to Embodiment 1 of the present invention.

In Step S2 in Fig. 6, the control unit (CPU) 30 determines that the connected terminal is a company terminal 4, and starts the facility state rewrite means 302.

In Step S31, the control unit (CPU) 30 extracts the type code from the identification code of the company terminal 4 stored in the company management information 312 to determine whether it is the company that owns the mortuary or the company that owns the first call vehicle.

For example, when the identification code is "01 (funeral home)" or "02 (morgue)," the control unit (CPU) 30 determines that it is the company that owns the mortuary (the facility), thus proceeding to Step 32.

When the identification code is "03 (funeral home/transport)" or "04 (specialized in transport)," the control unit (CPU) 30 determines that it is the company that owns the first call vehicle (the vehicle), thus proceeding to Step S51.

For example, in the example of the identification code 3120 in Fig. 4, since the type code is "03," the control unit (CPU) 30 proceeds to Step S51.

In Step S32, the control unit (CPU) 30 determines whether the control unit (CPU) 30 has received from the company terminal 4 flag information representing a new facility state that the facility state of the mortuary has changed or not.

When there is no change in the facility state, the flag information is not transmitted from the company terminal 4.

For example, when the control unit (CPU) 30 has received the flag information that the facility state is "0 (vacant)" or "1 (in use)" from the company terminal 4 (Y), the control unit (CPU) 30 proceeds to Step S33.

When the control unit (CPU) 30 has not received the flag information (N), the control unit (CPU) 30 proceeds to Step S34.

In Step S33, the control unit (CPU) 30 rewrites the facility state to "1 (in use)" when the current facility state is "0 (vacant)," and rewrites the facility state to "0 (vacant)" when the current facility state is "1 (in use)," and stores and updates the new facility state in the facility state information 316 together with the facility number.

Then, the control unit (CPU) 30 proceeds to Step S34.

In Step S34, the control unit (CPU) 30 executes the subroutine process of the state display means 304, and proceeds to Step S35 after returning.

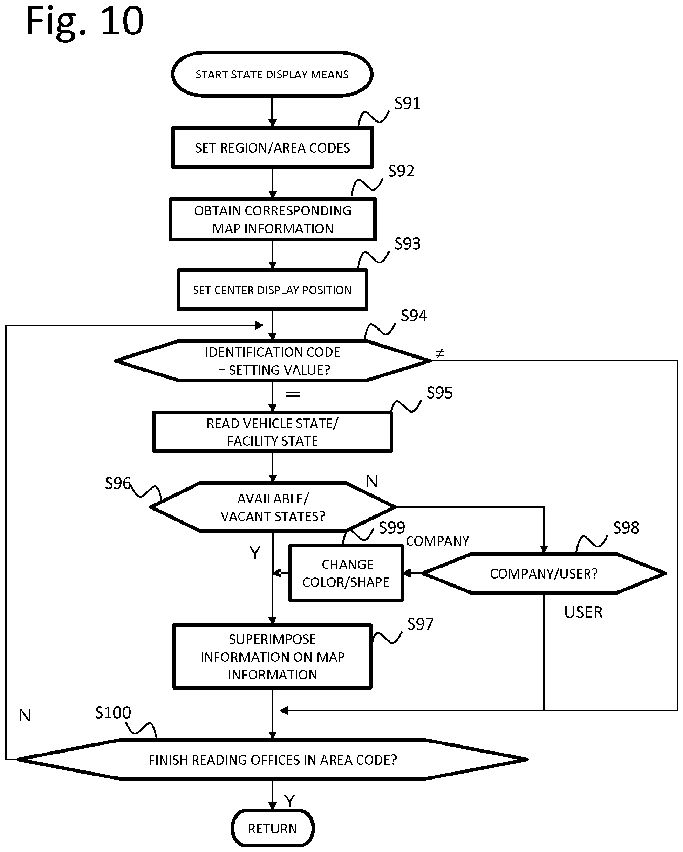

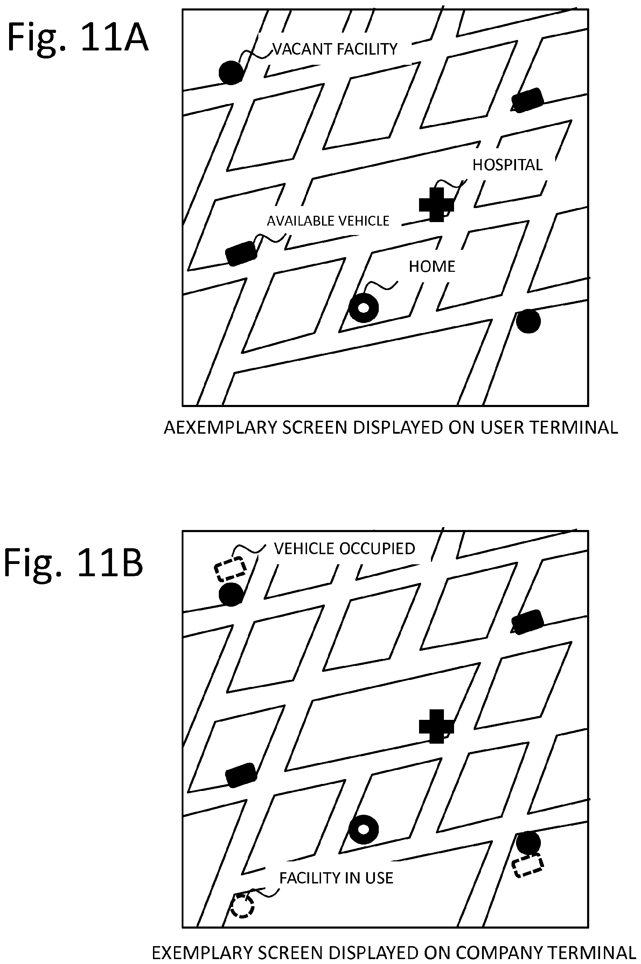

The specific procedure of the state display means 304 will be described later using Fig. 10 and Fig. 11.

In Step S35, the control unit (CPU) 30 determines whether there has been a facility reservation of the mortuary from the user terminal 5 or not.

That is, the control unit (CPU) 30 returns to Step S33 when the control unit (CPU) 30 has transmitted that the reservation of the mortuary has been confirmed to the user terminal 5 (Y).

When the control unit (CPU) 30 has not transmitted the reservation confirmation information of the mortuary to the user terminal 5 (N), the control unit (CPU) 30 ends the state rewrite means, and returns to the main procedure in Fig. 6, thus proceeding to Step S6.

In Step S31, when the control unit (CPU) 30 determines that it is the company that owns the first call vehicle by the type code of the company terminal 4 (the vehicle), the control unit (CPU) 30 starts the vehicle state rewrite means 303.

In Step S51, the control unit (CPU) 30 determines whether the control unit (CPU) 30 has received from the company terminal 4 flag information representing a new vehicle state that the vehicle state of the first call vehicle has changed.

When there is no change in the vehicle state, the flag information is not transmitted from the company terminal 4.

For example, when the control unit (CPU) 30 has received the flag information that the vehicle state is "0 (available)" or "1 (occupied)" from the company terminal 4 (Y), the control unit (CPU) 30 proceeds to Step S52.

When the control unit (CPU) 30 has not received the flag information (N), the control unit (CPU) 30 proceeds to Step S53.

In Step S52, the control unit (CPU) 30 rewrites the vehicle state to "1 (occupied)" when the current vehicle state is "0 (available)," and rewrites the vehicle state to "0 (available)" when the current vehicle state is "1 (occupied)," and stores and updates the new vehicle state in the vehicle state information 315 together with the vehicle number and the employee number.

Then, the control unit (CPU) 30 proceeds to Step S53.

In Step S53, the control unit (CPU) 30 executes the subroutine process of the state display means 304, and proceeds to Step S54 after returning.

The specific procedure of the state display means 304 will be described later using Fig. 10 and Fig. 11.

In Step S54, the control unit (CPU) 30 determines whether the control unit (CPU) 30 has confirmed the vehicle dispatch instruction to the company terminal 4 with respect to the dispatch application of the first call vehicle from the user terminal 5 or not.

The control unit (CPU) 30 returns to Step S52 when the control unit (CPU) 30 has confirmed the vehicle dispatch instruction by instructing the company terminal 4 of the first call vehicle that has received the vehicle dispatch request to connect to the user terminal 5 (Y).

When the control unit (CPU) 30 has not instructed the company terminal 4 to connect to the user terminal 5 (N), the control unit (CPU) 30 ends the facility state rewrite means 302, and returns to the main procedure in Fig. 6, thus proceeding to Step S6.

The following describes the specific procedure of the vehicle dispatch response means using Fig. 9 to Fig. 19.

Fig. 9 is a flowchart illustrating an overall procedure how the first call vehicle dispatch server serves the vehicle dispatch request from the user according to Embodiment 1 of the present invention.

In Step S71, the control unit (CPU) 30 receives request point (pickup location) information from the user terminal 5.

The request point information may be, for example, GPS information of the user terminal 5.

The request point information may be map information obtained by clicking on a map displayed on the screen of the user terminal 5, or may be character information that an address is input by a keyboard or the like.

In Step S72, the control unit (CPU) 30 executes the subroutine process of the state display means 304, and transmits the information regarding the available first call vehicle and the vacant mortuary to be displayed on the map displayed on the screen of the user terminal 5.

In Step S73, the control unit (CPU) 30 executes the subroutine process of the facility reservation means 305, and reserves the mortuary to be the destination associated with the first call vehicle instructed to be dispatched before the dispatch of the first call vehicle.

In Step S74, the control unit (CPU) 30 executes the subroutine process of the vehicle dispatch instruction means 306 associated with the mortuary confirmed in Step S73, and executes the dispatch instruction of the first call vehicle that transports the corpse from the request point confirmed in Step S71 to the mortuary that is the destination confirmed in Step S73.

Further, in Step S75, the control unit (CPU) 30 executes the subroutine process of the fare settlement means 307, and executes a fare settlement process after the corpse has transported to the destination.

The following describes a procedure of the state display means 304 executed in Step S72 using Fig. 10 and Fig. 11.

Fig. 10 is a flowchart illustrating a procedure how the first call vehicle dispatch server displays the vehicle and facility states according to Embodiment 1 of the present invention.

Fig. 11A and Fig. 11B are exemplary screen displayed on the user terminal and the company terminal according to Embodiment 1 of the present invention.

In Step S91, the control unit (CPU) 30 sets the region code based on the region table 311A and sets the area code based on the area table 311B in response to the request point information received in Step S71.

For example, when the received request point information is "XXX-Cho, Ishikari, Hokkaido," the region code is "01," and the area code is "003."

In Step S92, the control unit (CPU) 30 reads out the map information 318 corresponding to the region/area codes into RAM, for example, in response to the set region code and area code.

The control unit (CPU) 30 may connect with an external map server to receive the map information corresponding to the region/area codes.

In Step S93, the control unit (CPU) 30 sets the request point to be displayed approximately at the center of the terminal screen.

In Step S94, the control unit (CPU) 30 compares the region code/area code extracted from the identification code of the company stored in the company management information 312 with the region code/area code of the set request point.

When they are equal (=), the control unit (CPU) 30 proceeds to Step S95.

When they are unequal (≠), the control unit (CPU) 30 proceeds to Step S100.

This is for efficiently extracting the company whose business area includes the request point.

In Step S95, the control unit (CPU) 30 reads out the corresponding vehicle state information 315 and the facility state information 316 into RAM, for example, based on the identification code of the company extracted in Step S94, thus proceeding to Step S96.

In Step S96, the control unit (CPU) 30 determines whether the extracted vehicle state of the vehicle state information 315 is "0 (available)," or whether the facility state of the facility state information 316 is "0 (vacant)."

When the vehicle state is "0 (available)" or the facility state is "0 (vacant)" (Y), the control unit (CPU) 30 proceeds to Step S97.

When the vehicle state is "1 (occupied)" or the facility state is "1 (in use)" (N), the control unit (CPU) 30 proceeds to Step S98.

In Step S97, the control unit (CPU) 30 superimposes and displays the information regarding the company that owns the extracted vehicle or mortuary on the map information displayed on the screen of the user terminal 5.

Fig. 11A is an exemplary screen displayed on the user terminal 5.

For example, the hospital or the request point is displayed at the center of the screen, two available vehicles are indicated by black rectangles, and two facilities having vacant rooms are indicated by black circles.

In Step S98, the control unit (CPU) 30 determines whether the currently connected terminal is the company terminal 4 or the user terminal 5.

When the connected terminal is the company terminal 4, the control unit (CPU) 30 proceeds to Step S99.

When the connected terminal is the user terminal 5, the control unit (CPU) 30 proceeds to Step S100.

In Step S99, the control unit (CPU) 30 superimposes and displays the information regarding the company also including the vehicle that is "1 (occupied)" and the mortuary that is "1 (in use)" by changing colors and shapes with respect to the company terminal 4.

For example, the vehicle that is "1 (occupied)" and the mortuary that is "1 (in use)" may be indicated in gray-out or may be indicated with an emphasis, for example, by blinking them with a red color or a star.

Thus, companies can conveniently know operating status of the profession in the identical business area.

Fig. 11B is an exemplary screen displayed on the company terminal 4.

For example, two vehicles occupied are indicated by rectangles with the dotted line, and one facility in use is indicated by a white circle with the dotted line.

In Step S100, the control unit (CPU) 30 determines whether the control unit (CPU) 30 has read out all the offices in the area code or not in response to the identification code of the company management information 312.

When the control unit (CPU) 30 has not read out all the companies in the area code (N), the control unit (CPU) 30 returns to Step S94.

When the control unit (CPU) 30 has read out all the companies in the area code (Y), the control unit (CPU) 30 ends the state display means 304, and returns to the procedure in Fig. 9, thus proceeding to Step S73.

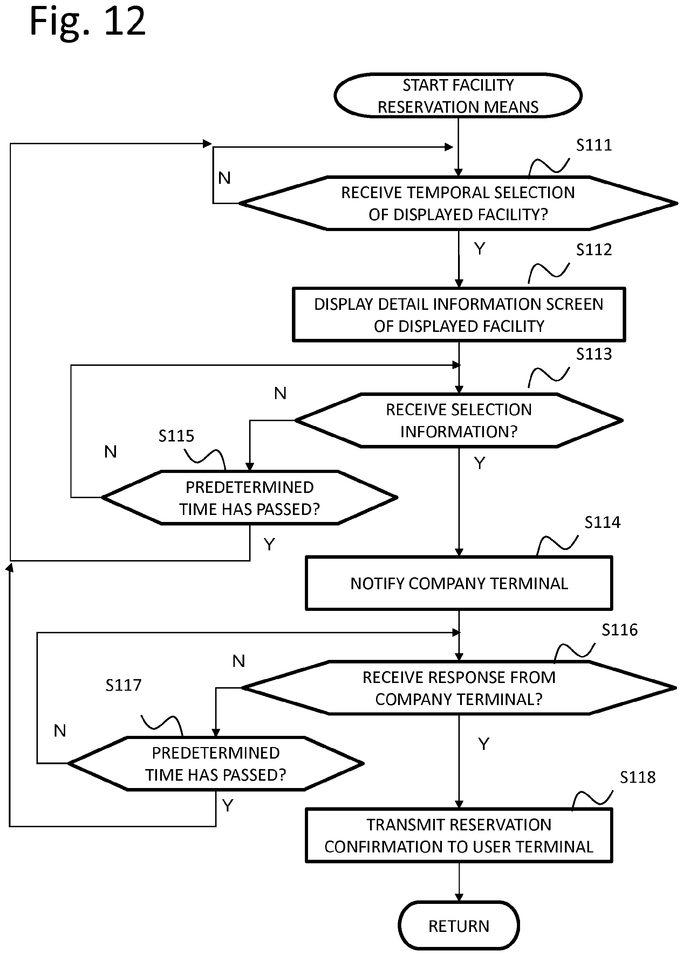

A procedure of the facility reservation means 305 executed in Step S73 will be described using Fig. 12 to Fig. 14.

Fig. 12 is a flowchart illustrating a procedure to execute the facility reservation of the first call vehicle dispatch server according to Embodiment 1 of the present invention.

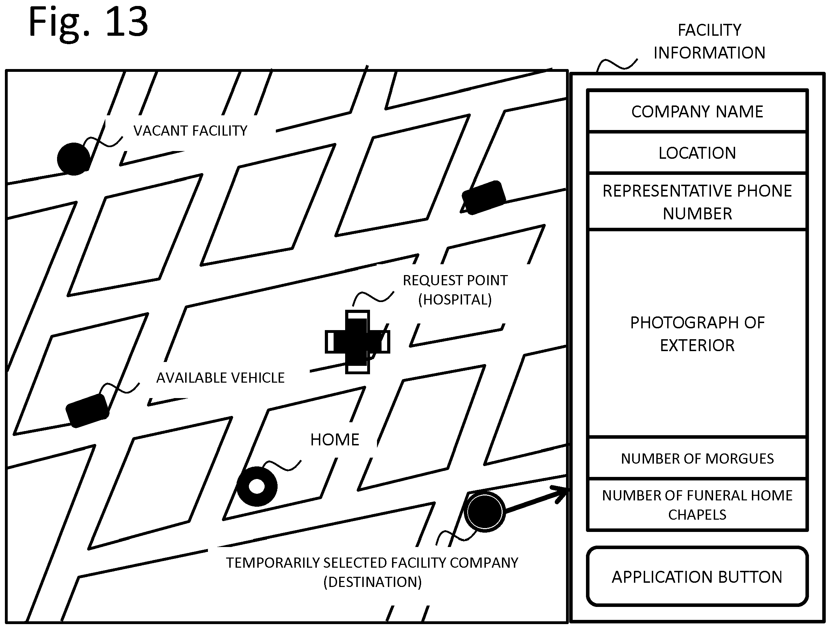

Fig. 13 is an exemplary screen displaying a state when the destination is temporarily selected on the user terminal according to Embodiment 1 of the present invention.

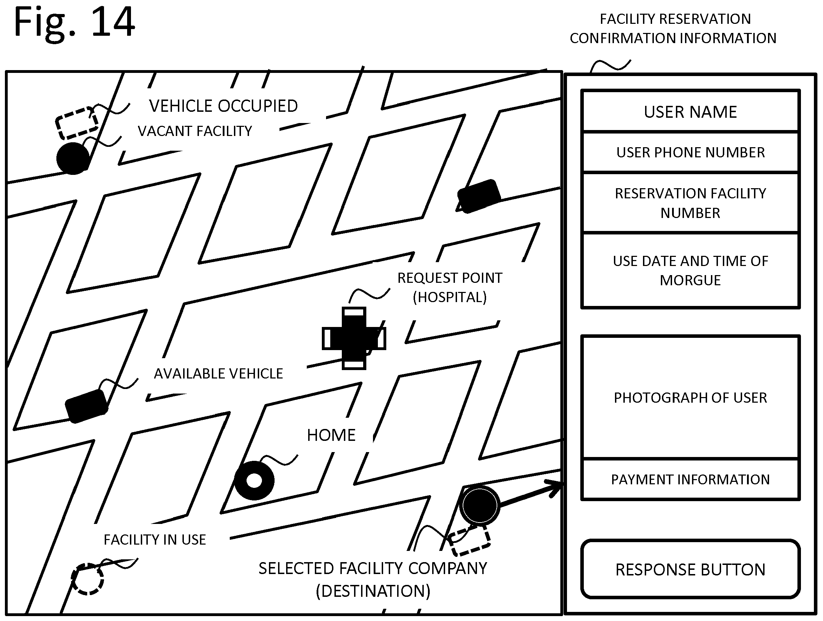

Fig. 14 is an exemplary screen displaying facility reservation confirmation information on the company terminal according to Embodiment 1 of the present invention.

In Step Sill, the control unit (CPU) 30 determines whether the control unit (CPU) 30 has received temporal selection information from the user terminal 5 with respect to the displayed vacant mortuary or not.

When the control unit (CPU) 30 has received the temporal selection information of any vacant mortuary from the user terminal 5 (Y), the control unit (CPU) 30 proceeds to Step S112.

When the control unit (CPU) 30 has not received the temporal selection information of any vacant mortuary from the user terminal 5 (N), the control unit (CPU) 30 returns to Step S111, and waits for the reception of the temporal selection information.

In Step S112, the control unit (CPU) 30 transmits to the user terminal 5 detail information regarding the temporarily selected mortuary based on the temporal selection information received from the user terminal 5, and displays the detail information on the screen of the user terminal 5.

For example, an outer frame is attached to the facility on the map in Fig. 13 so as to see that the facility has been temporarily selected, for example, the facility information such as the company name of the facility, the address, the representative phone number, the exterior photograph of the facility, the number of the morgues, and the number of funeral home chapels stored in the company management information 312 is displayed on the right side of the map, and an application button is displayed at the bottom right.

In Step S113, the control unit (CPU) 30 determines whether the application button has been clicked on the user terminal 5, and selection information to select the vacant mortuary associated with the first call vehicle instructed to be dispatched later has been transmitted or not.

When the control unit (CPU) 30 does not receive the selection information from the user terminal 5 (N), the control unit (CPU) 30 proceeds to Step S115, and the control unit (CPU) 30 determines whether a predetermined time has passed after displaying the detail information of the facility or not.

When the predetermined time has not passed (N), the control unit (CPU) 30 returns to Step S113, and waits for the reception of the selection information.

When the predetermined time has passed (Y), the control unit (CPU) 30 determines that the temporarily selected mortuary has not selected, thus returning to Step S111, and waits for the reception of the temporal selection information.

In Step S113, when the control unit (CPU) 30 has received the selection information from the user terminal 5 (Y), the control unit (CPU) 30 proceeds to Step S114.

In Step S114, the control unit (CPU) 30 transmits confirmation information relative to the selected morgue to the company terminal 4 of the selected morgue, and displays the confirmation information on the screen of the company terminal 4.

For example, the outer frame is attached to the facility on the map in Fig. 14 so as to see that the facility has received the application, the facility reservation confirmation information such as the name of the user who has made the application, the phone number of the user, the facility number of the reserved morgue, the beginning date and time to use the morgue, the photograph of the user, and the payment information is displayed on the right side of the map, and a response button is displayed at the bottom right.

In Step S116, the control unit (CPU) 30 determines whether the response button has been clicked from the notified company terminal 4, and response information has been transmitted or not.

When the control unit (CPU) 30 does not receive the response information from the company terminal 4 (N), the control unit (CPU) 30 proceeds to Step S117, and the control unit (CPU) 30 determines whether the predetermined time has passed after transmitting the confirmation information to the company terminal 4 or not.

When the predetermined time has not passed (N), the control unit (CPU) 30 returns to Step S116, and waits for the reception of the response information.

When the predetermined time has passed (Y), the control unit (CPU) 30 determines that the company has not accepted the application from the user terminal 5, thus returns to Step S111, and requests the user terminal 5 to temporarily select another mortuary.

In Step S116, when the control unit (CPU) 30 has received the response information from the company terminal 4 (Y), the control unit (CPU) 30 proceeds to Step S118.

In Step S118, the control unit (CPU) 30 transmits the reservation confirmation information where the applied reservation of the mortuary has been confirmed to the user terminal 5, and ends the facility reservation means 305, and return to the procedure in Fig. 9, thus proceeding to Step S74.

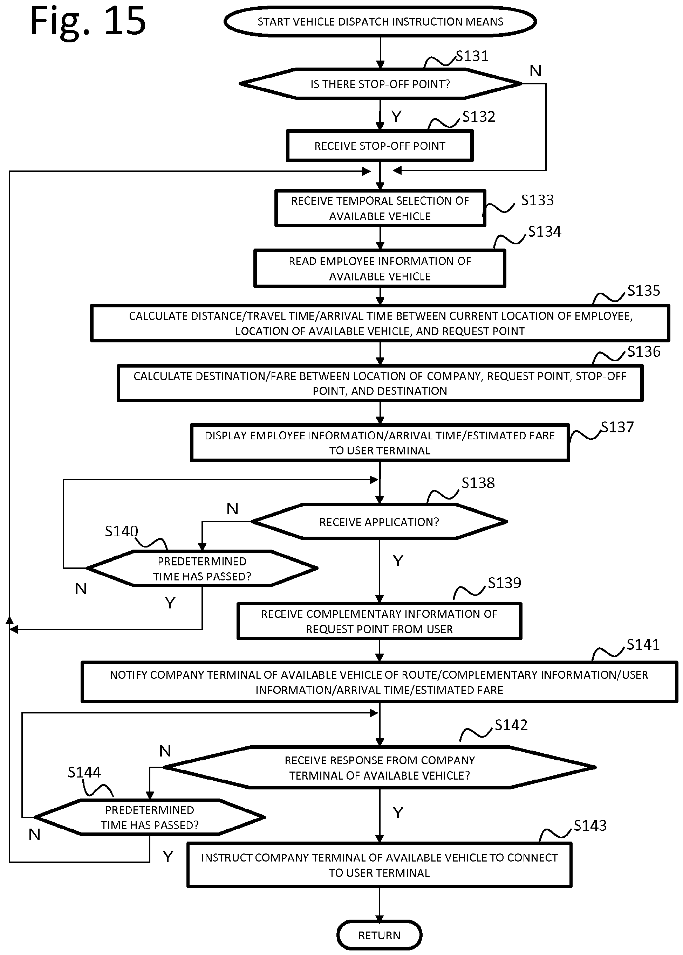

A procedure of the vehicle dispatch instruction means 306 executed in Step S74 will be described using Fig. 15 to Fig. 17.

Fig. 15 is a flowchart illustrating a procedure how the first call vehicle dispatch server displays vehicle dispatch information according to Embodiment 1 of the present invention.

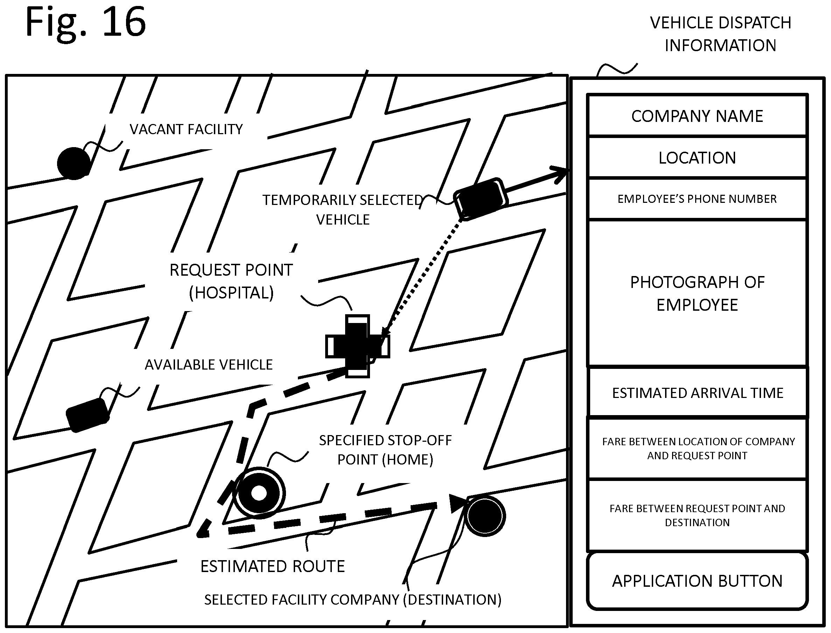

Fig. 16 is an exemplary screen when a vehicle has been temporarily selected, which displays the vehicle dispatch information on the user terminal according to Embodiment 1 of the present invention.

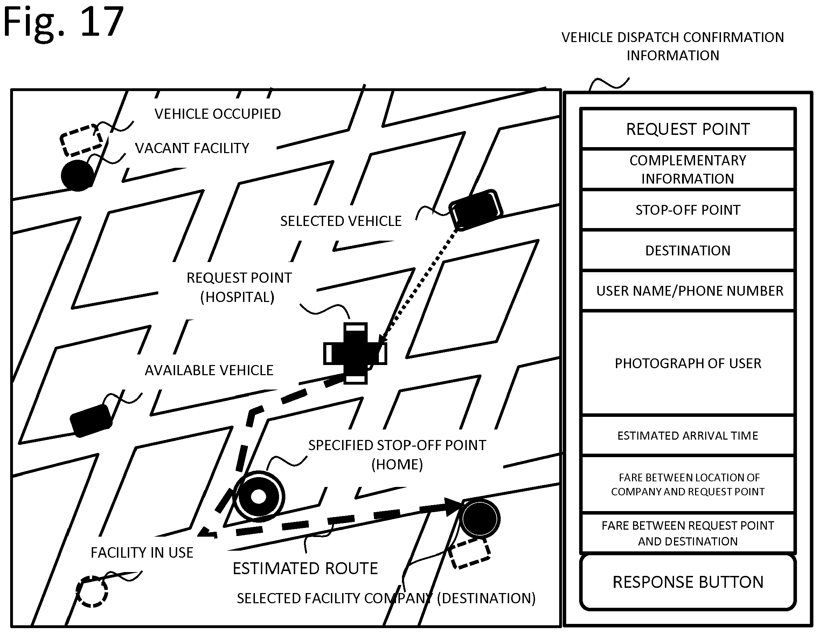

Fig. 17 is an exemplary screen displaying vehicle dispatch confirmation information on the company terminal according to Embodiment 1 of the present invention.

In Step S131, the control unit (CPU) 30 inquires of the user terminal 5 about whether there is a stop-off point to stop off in its course in addition to the request point information received in Step S71 and the morgue or the destination confirmed in Step S119 or not.

For example, when a person was deceased in a hospital, the corpse is directly placed in the morgue from the hospital, and a funeral is directly performed in the funeral home chapel, the bereaved family might request consideration, for example, for the bereaved family to give a feeling to have returned to the home to the deceased such that the first call vehicle once stops in front of the home in the transport of the corpse.

When the reception from the user terminal 5 is "N," the control unit (CPU) 30 determines that there is no stop-off point to proceed to Step S133.

When the reception from the user terminal 5 is "Y," the control unit (CPU) 30 proceeds to Step S133 after receiving stop-off point information from the user terminal 5 in Step S132.

The stop-off point information may be obtained by directly clicking the stop-off point on the map or may be obtained, for example, by directly inputting the address or the facility name from the keyboard.

In Step S133, the control unit (CPU) 30 waits for that the temporal selection information is transmitted from the user terminal 5 with respect to the displayed available first call vehicle.

The control unit (CPU) 30 proceeds to Step S134 after receiving the temporal selection information.

In Step S134, the control unit (CPU) 30 extracts the employee number of the employee that will be a driver from the vehicle state information 315 of the temporarily selected available first call vehicle, reads out the employee name, the employee's phone number, the photograph of the employee, and the like from the employee management information 313 corresponding to this employee number into RAM, and requests the company terminal 4 carried by this employee to transmit the GPS information, and receives current location information of the employee.

In Step S135, the control unit (CPU) 30 calculates a distance from the obtained current location of the employee to a location of the available vehicle and a distance from the available vehicle to the request point based on the map information.

Here, the location of the available vehicle is the location of the company that owns the available vehicle.

Usually, the current location of the employee is identical to the location of the company.

However, the employee is possibly away from the location of the company, for example, on business.

Therefore, the current location of the employee is calculated by receiving location information for confirmation.

The control unit (CPU) 30, for example, calculates a period on foot of the distance from the current location of the employee to the available vehicle location and calculates a period by the first call vehicle of the distance from the available vehicle location to the request point, and then, estimates an estimated arrival time based on them.

In Step S136, the control unit (CPU) 30 calculates a distance from the request point to the destination through the stop-off point based on the map information.

Then, the control unit (CPU) 30 calculates respective estimated fares of the distance from the address of the company to the request point calculated in Step S135 and the distance from the request point to the destination, based on the base fare and the fare per distance of the vehicle state information 315.

Charging not only the fare for the distance from the request point to the destination like a taxi but also the fare for the distance from the address of the company to the request point is based on the Motor Truck Transportation Business Act.

In Step S137, the control unit (CPU) 30 transmits to the user terminal 5 the information of the employee who will be the driver of the first call vehicle and the vehicle dispatch information such as the estimated arrival time and the estimated fare, and displays those information on the screen of the user terminal 5.

For example, the outer frame is attached to the vehicle on the map in Fig. 16 so as to see that the vehicle has been temporarily selected, and an estimated route is indicated by two kinds of dotted lines.

The vehicle dispatch information such as the company name of the first call vehicle, the address, the employee's phone number, the photograph of the employee, the estimated arrival time, a first estimated fare from the address to the request point, and a second estimated fare from the request point to the destination is displayed on the right side of the map, and the application button is displayed at the bottom right.

In Step S138, the control unit (CPU) 30 determines whether the application button has been clicked by the user terminal 5, and the selection information to select the available first call vehicle associated with the previously confirmed vacant mortuary has been transmitted or not.

When the control unit (CPU) 30 does not receive the selection information from the user terminal 5 (N), the control unit (CPU) 30 proceeds to Step S140, and the control unit (CPU) 30 determines whether the predetermined time has passed after displaying the vehicle dispatch information or not.

When the predetermined time has not passed (N), the control unit (CPU) 30 returns to Step S138, and waits for the reception of the selection information.

When the predetermined time has passed (Y), the control unit (CPU) 30 determines that the temporarily selected vehicle has not selected, thus returning to Step S133, and waits for the reception of the temporal selection information.

In Step S138, when the control unit (CPU) 30 has received the selection information from the user terminal 5 (Y), the control unit (CPU) 30 proceeds to Step S139.

In Step S139, the control unit (CPU) 30 requests complementary information of the request point from the user terminal 5, and receives the complementary information of the request point from the user terminal 5.

The complementary information of the request point includes information necessary in the transport such as the name of the deceased, the floor and room number at the specific department or the morgue where the deceased is laid in the hospital.

In Step S141, the control unit (CPU) 30 transmits the confirmation information relative to the selected vehicle to the company terminal 4 of the selected vehicle, and displays that information on the screen of the company terminal 4.

For example, the outer frame is attached to the vehicle on the map in Fig. 17 so as to see that the vehicle has received the application, and the estimated route is indicated by two kinds of dotted lines.

The vehicle dispatch confirmation information such as the request point, the complementary information, route information of the stop-off point, the destination, and the like, the name/phone number of the user who made the application, the photograph of the user, the estimated arrival time, the estimated fare from the address of the company to the request point, and the estimated fare from the request point to the destination is displayed on the right side of the map, and the response button is displayed at the bottom right.

In Step S142, the control unit (CPU) 30 determines whether the response button has been clicked and the response information has been transmitted from the notified company terminal 4 or not.

When the control unit (CPU) 30 does not receive the response information from the company terminal 4 (N), the control unit (CPU) 30 proceeds to Step S144, and the control unit (CPU) 30 determines whether the predetermined time has passed after transmitting the confirmation information to the company terminal 4 or not.

When the predetermined time has not passed (N), the control unit (CPU) 30 returns to Step S142 to wait for the reception of the response information.

When the predetermined time has passed (Y), the control unit (CPU) 30 determines that the company has not accepted the application from the user terminal 5, thus returning to

Step S133, and requests the user terminal 5 to temporarily select another vehicle.

In Step S143, the control unit (CPU) 30 instructs the company terminal 4 that has transmitted the response information to connect to the user terminal 5.

For example, the control unit (CPU) 30 executes blinking display on "USER NAME/PHONE NUMBER" in the vehicle dispatch confirmation information in Fig. 17, and, for example, causes a telephone application of the company terminal 4 to automatically activate to cause the company terminal 4 to dial the telephone number of the user terminal 5 by clicking on the display "USER NAME/PHONE NUMBER" at the company terminal 4.

The control unit (CPU) 30 may cause e-mail application to automatically activate to cause the company terminal 4 to, for example, transmit e-mail or the like including the estimated arrival time, the name of the employee in charge, the vehicle number, and the like to the user terminal 5.

The control unit (CPU) 30 ends the vehicle dispatch instruction means 306, and returns to the procedure in Fig. 9 after instructing the company terminal 4, thus, proceeding to Step S75.

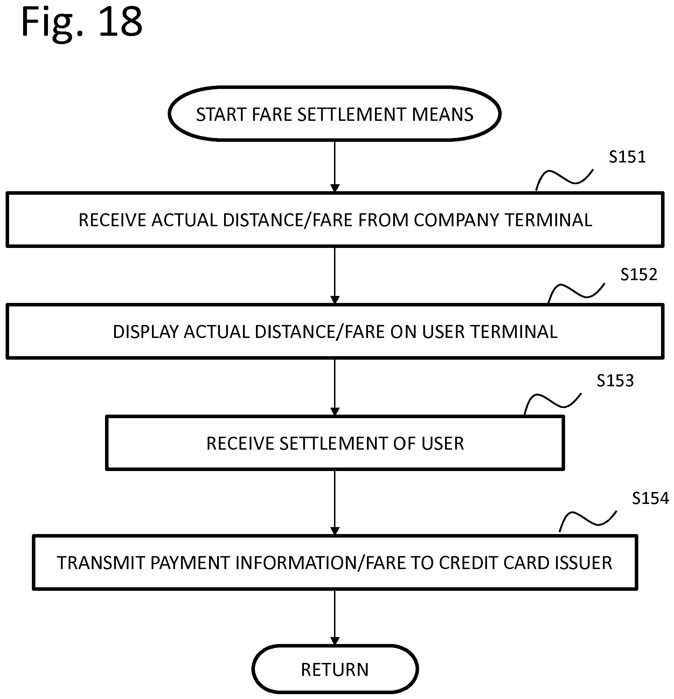

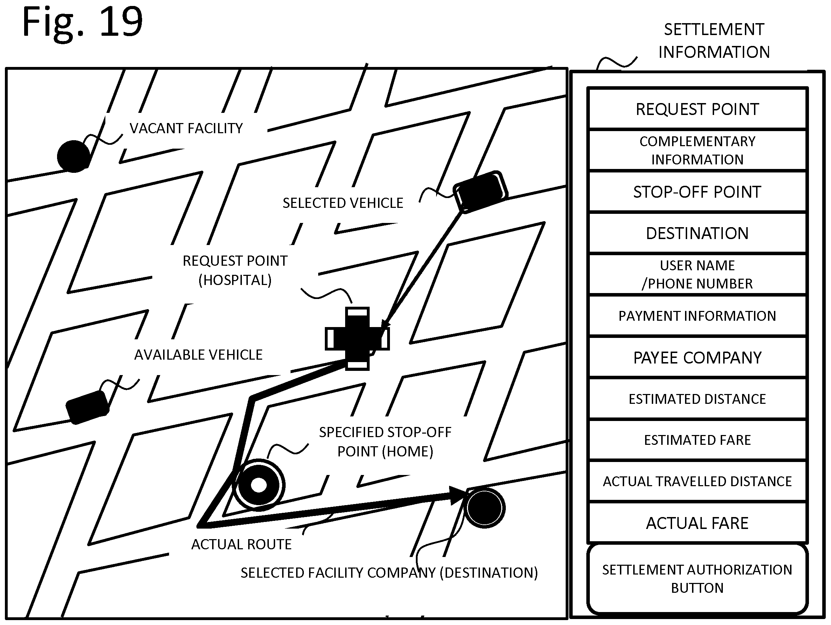

Finally, a procedure of the fare settlement means 307 executed in Step S75 will be described using Fig. 18 and Fig. 19.

Fig. 18 is a flowchart illustrating a procedure of the fare settlement of the first call vehicle dispatch server according to Embodiment 1 of the present invention.

Fig. 19 is an exemplary screen displaying settlement information on the user terminal according to Embodiment 1 of the present invention.

In Step S151, the control unit (CPU) 30 receives the actual travelled distance and the actual fare from the company terminal 4 carried by the employee of the first call vehicle that has finished laying a corpse in a mortuary after arriving at the destination.

In Step S152, the control unit (CPU) 30 transmits to the user terminal 5 the settlement information including the actual travelled distance and the actual fare received from the company terminal 4, and displays that information on the screen of the user terminal 5.

For example, the actual travelled route is indicated by two kinds of solid lines on the map in Fig. 19, the settlement information such as the request point, the complementary information, the route information such as the stop-off point and the destination, the name/phone number of the user, the payment information, a payee company, the estimated distance, the estimated fare, the actual travelled distance, and the actual fare is displayed on the right side of the map, and a settlement authorization button is displayed at the bottom right.

In Step S153, the control unit (CPU) 30 waits for that the settlement authorization button is clicked and settlement authorization information is transmitted from the user terminal 5.

The control unit (CPU) 30 proceeds to Step S154 after receiving the settlement authorization information from the user terminal 5.

In Step S154, the control unit (CPU) 30 transmits fare information to a system of a credit card issuer or the like, and executes billing based on the payment information of the user management information 314.

The control unit (CPU) 30 ends the fare settlement means 307, and returns to the procedure in Fig. 9.

Further, the control unit (CPU) 30 ends the vehicle dispatch response means in Fig. 9, and returns to the procedure in Fig. 6, thus proceeding to Step S6.

As described above, the description of the sequence of procedures regarding the first call vehicle dispatch server according to Embodiment 1 of the present invention ends.

Thus, by employing the above-described configuration, even when the emergency has occurred, a selection opportunity of the desired mortuary can be provided, and the user can arrange the first call vehicle in the first call vehicle dispatch server according to Embodiment 1 of the present invention.

### [Embodiment 2]

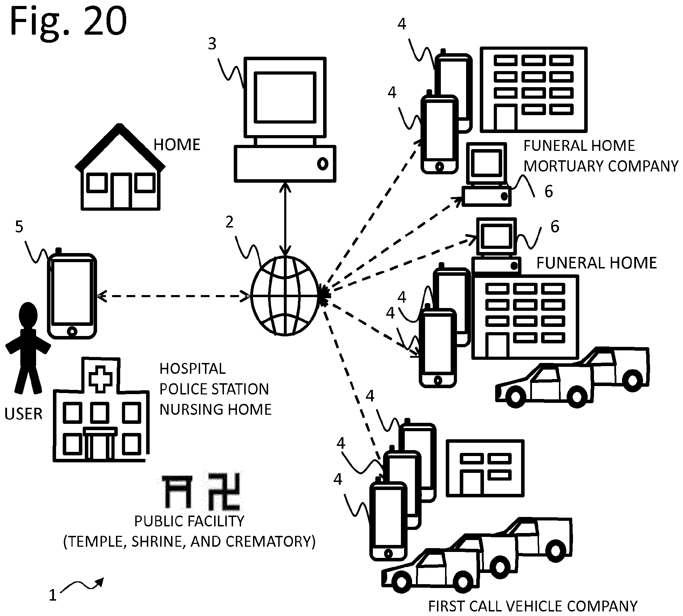

The following describes a first call vehicle dispatch server according to Embodiment 2 of the present invention using Fig. 20 to Fig. 26.

Basic functional configuration and procedure of the first call vehicle dispatch server in this embodiment are identical to those illustrated in the first embodiment, and therefore those description will be omitted.

Fig. 20 is a view illustrating an exemplary overall configuration of the first call vehicle dispatch system according to Embodiment 2 of the present invention.

A first call vehicle dispatch system 1 illustrated in Fig. 20 has differences in the configuration in that the first call vehicle dispatch server 3 is connected to a facility reservation server 6 via the Internet 2, that not only the mortuary but also the funeral home chapel is added on the facilities, and that the public facility is added on the facilities of the mortuary or the funeral home chapel.

The facility reservation server 6 may be a plurality of servers operated by the respective companies, or may be a single server operated by one administrator.

The facility reservation server 6 knows vacant statuses and the reservation statuses of not only the morgue such as a chapel of rest and mortuary cold chambers but also the funeral home chapel, and can share the information with the first call vehicle dispatch server 3 via the Internet 2.

The first call vehicle dispatch server 3 handles not only the funeral companies, the mortuary companies, and the first call vehicle companies, but also the public facilities such as temples, shrines, and crematories as the facilities displayed on the company terminal 4 and the user terminal 5.

The first call vehicle dispatch server 3 also handles the vacant status of the funeral home chapels in order to share the information with the facility reservation server 6.

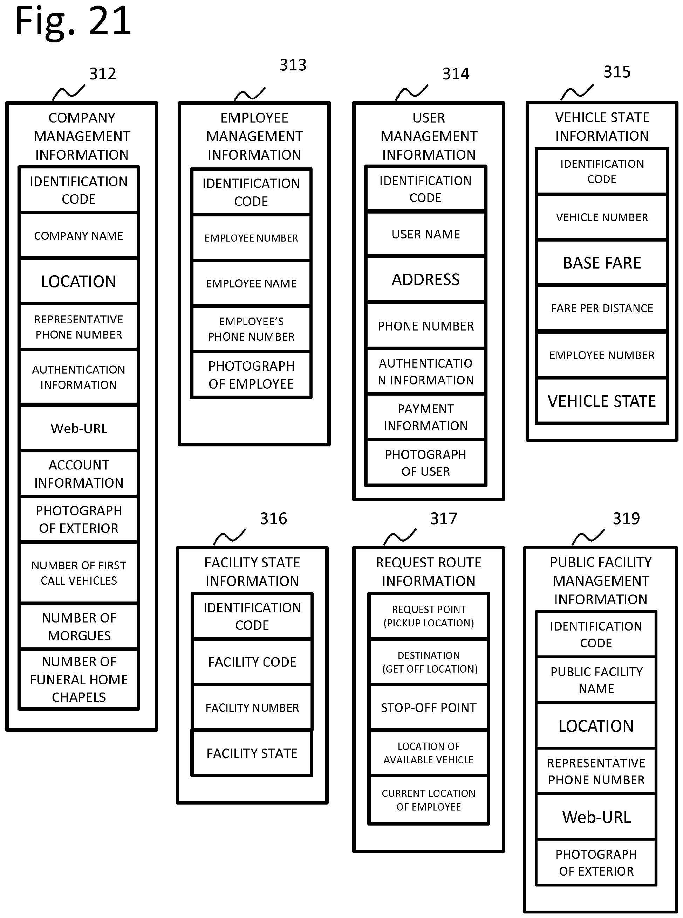

Fig. 21 is a view illustrating an example of data formation in a storage unit of the first call vehicle dispatch server according to Embodiment 2 of the present invention.

A difference from the example of data formation of the first call vehicle dispatch server according to Embodiment 1 of the present invention illustrated in Fig. 4 is that public facility management information 319 and a facility code of the facility state information 316 are added.

The public facility management information 319 holds information regarding the mortuaries and the funeral homes owned by the temples or the shrines, and the funeral home chapels attached to the crematory, and specifically, holds respectively the identification code of the public facility, a public facility name, the address, the representative phone number, the Web-URL, the photograph of exterior, and the like.

The facility state information 316 holds information regarding the mortuaries owned by the funeral companies, the mortuary companies and the public facilities, the funeral home chapels owned by the funeral companies and the public facilities, and the like.

Specifically, the facility state information 316 holds respectively the identification code of the company or the public facility, the facility code representing the mortuary or the funeral home chapel, the facility number of the mortuary or the funeral home chapel, the facility state representing whether the facility is vacant or in use, and the like.

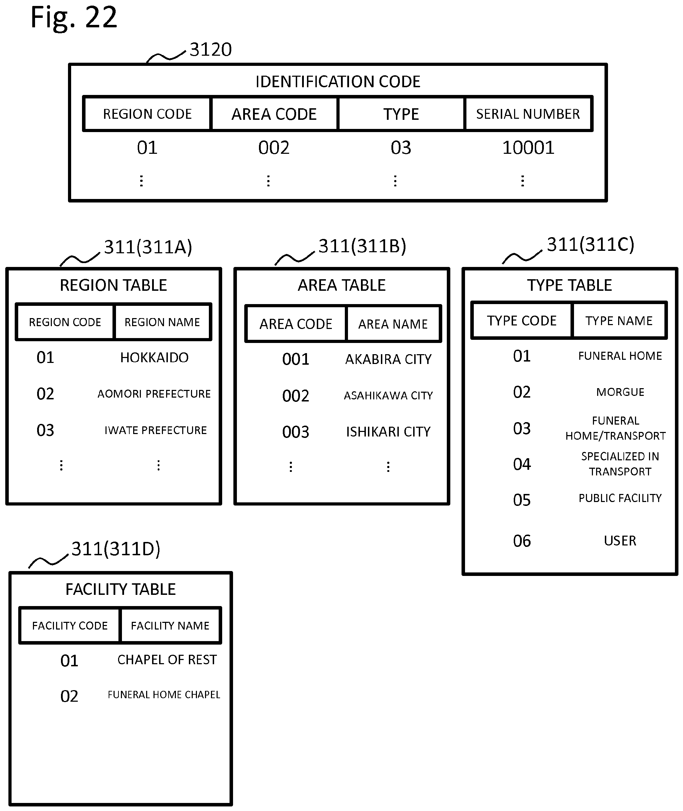

Fig. 22 is a view illustrating exemplary various table configurations in the storage unit of the first call vehicle dispatch server according to Embodiment 2 of the present invention.

A difference from the exemplary table configuration of the first call vehicle dispatch server according to Embodiment 1 of the present invention illustrated in Fig. 5 is that a facility table 311D is added.

A type name "PUBLIC FACILITY" is also added to the type code "05" in the type table 311C.

The facility table 311D is configured from the facility code and the facility name.

For example, a facility code "01" and a facility name "CHAPEL OF REST" are stored in the facility table 311D in a pair.

The facility code is used for vacant room management of the mortuary and the funeral home chapel.

In Embodiment 2 of the present invention, input of the public facility management information 319 and change in the facility state of the public facility are implemented by the input unit 33 of the first call vehicle dispatch server 3 as needed.

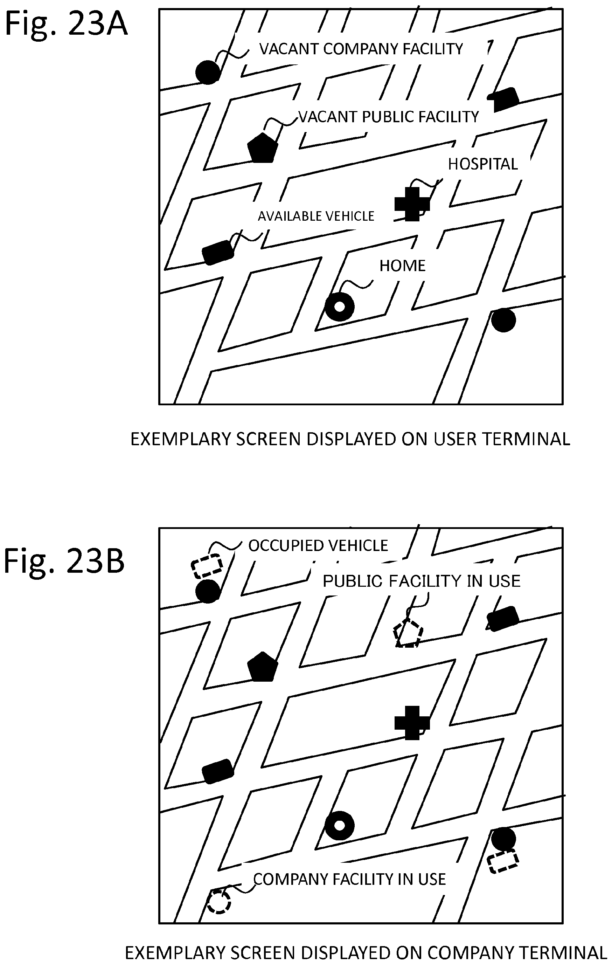

Fig. 23A and Fig. 23B are exemplary screens displayed on the user terminal and the company terminal according to Embodiment 2 of the present invention.

Fig. 23A is an exemplary screen displayed on the user terminal 5.

For example, two vacant facilities of the company are indicated by black circles, and one vacant facility of the public facility is indicated by a black pentagon.

Fig. 23B is an exemplary screen displayed on the company terminal 4.

For example, one public facility in use is indicated by a pentagon with the dotted line.

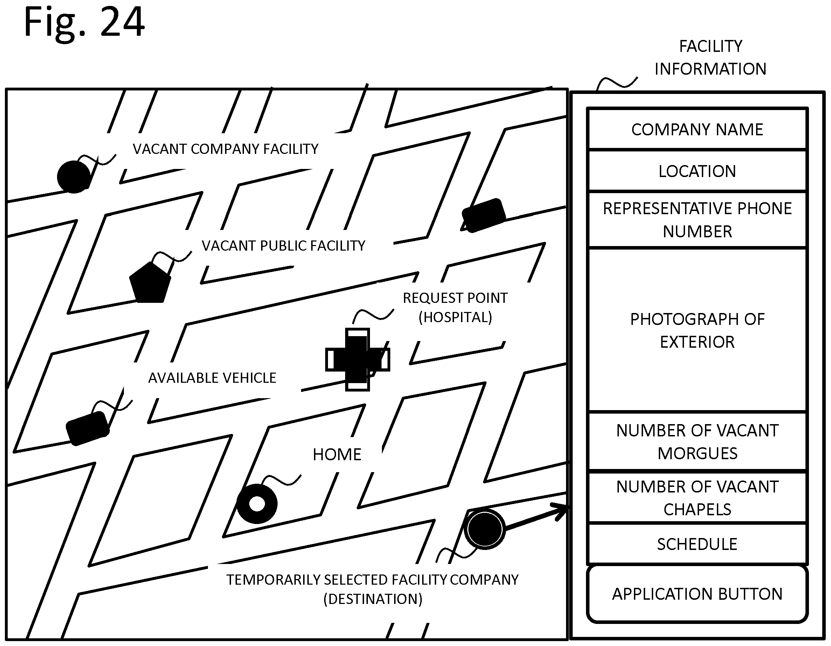

Fig. 24 is an exemplary screen displaying a state when the destination has been temporarily selected on the user terminal according to Embodiment 2 of the present invention.

Differences from the exemplary screen displayed on the user terminal 5 by the first call vehicle dispatch server 3 according to Embodiment 1 of the present invention illustrated in Fig. 13 are the number of the vacant morgues and the number of the vacant chapels, and a schedule button in the facility information displayed on the right side of the map.

Between Step S111 and Step S112 in Fig. 12, the control unit (CPU) 30 obtains the number of the vacant morgues and the number of the vacant chapels by subtracting the numbers of the morgues and the funeral home chapels in use stored in the facility state information 316 from the number of the morgues and the number of the funeral home chapels of the facilities stored in the company management information 312, for the temporarily selected mortuary based on the temporal selection information received from the user terminal 5.

In Step S112 in Fig. 12, the control unit (CPU) 30 displays the exemplary screen illustrated in Fig. 24 on the user terminal 5.

In the process between Step S112 and Step S113 in Fig. 12, when the control unit (CPU) 30 receives the click of the schedule button illustrated in Fig. 24 from the user terminal 5, the control unit (CPU) 30, for example, transmits demand for information regarding the reservation status of the corresponding funeral home chapel to the facility reservation server 6, receives the corresponding information from the facility reservation server 6, and displays the facility reservation status on the screen of the user terminal 5.

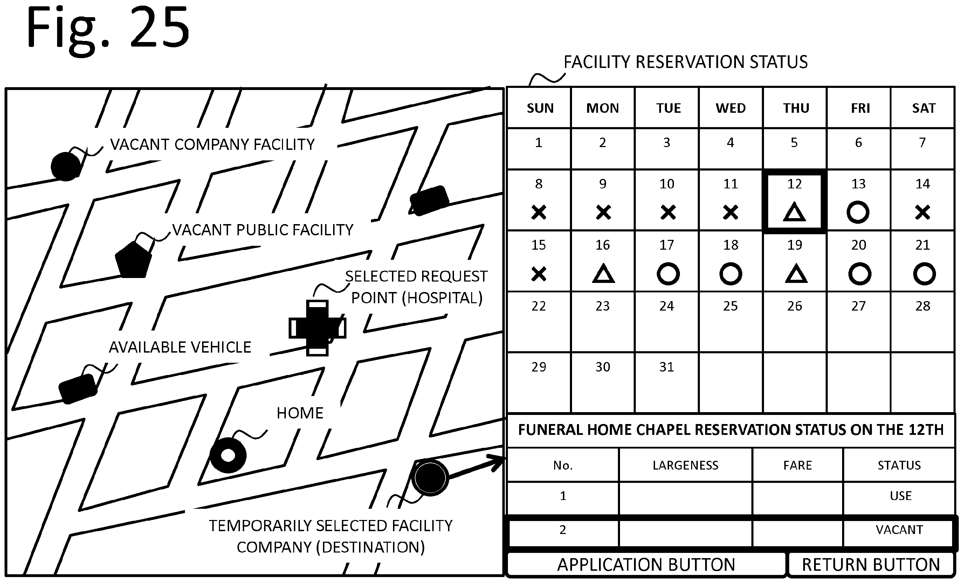

Fig. 25 illustrates the displayed exemplary screen.

Fig. 25 is the exemplary screen displaying the facility reservation status of the funeral home chapel on the user terminal according to Embodiment 2 of the present invention.

For example, as in Fig. 25, a facility reservation overview in a calendar format of the funeral home chapel and the vacant status per chapel on the temporarily selected date are displayed at the side of the map, and the application button and a return button are displayed at the bottom right.

When the vacant funeral home chapel is clicked, and further, the application button is clicked on the user terminal 5, the control unit (CPU) 30 determines that the control unit (CPU) 30 has received the temporal selection information of this funeral home chapel.

On the other hand, when the return button is clicked, the control unit (CPU) 30 determines that the control unit (CPU) 30 has not received the temporal selection information for the funeral home chapel.

The control unit (CPU) 30, in any case, causes the screen displayed on the user terminal 5 to return to the screen in Fig. 24.

In Step S113 in Fig. 12, when the application button in Fig. 24 is clicked on the user terminal 5, and when the control unit (CPU) 30 has received the temporal selection information of the funeral home chapel in the process between Step S112 and Step S113, the control unit (CPU) 30 determines that the control unit (CPU) 30 has received the selection information for both the mortuary and the funeral home chapel.

When the control unit (CPU) 30 has not received the temporal selection information of the funeral home chapel in the process between Step S112 and Step S113, the control unit (CPU) 30 determines that the control unit (CPU) 30 has received the selection information only for the mortuary.

In Step S113, when the application button in Fig. 24 has not been clicked on the user terminal 5 within a predetermined time, the control unit (CPU) 30 determines that the control unit (CPU) 30 has received the selection information for neither the mortuary nor the funeral home chapel.

In Step S114 in Fig. 12, the control unit (CPU) 30 transmits to the company terminal 4 of the selected facility, the confirmation information relative to the morgue or both the morgue and the funeral home chapel selected by the user terminal 5 in Step S113, and displays the confirmation information on the screen of the company terminal 4.

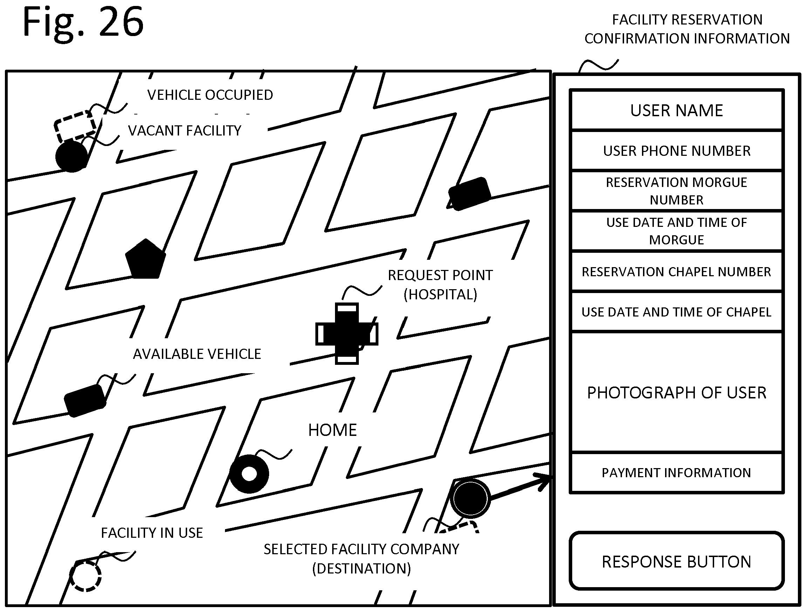

Fig. 26 illustrates the displayed exemplary screen.

Fig. 26 is the exemplary screen displaying the facility reservation confirmation information on the company terminal according to Embodiment 2 of the present invention.

Differences from the exemplary screen displayed on the company terminal 4 by the first call vehicle dispatch server according to Embodiment 1 of the present invention illustrated in Fig. 14 are a reserved chapel number and its date and time of use in the facility reservation confirmation information displayed on the right side of the map.

In Step S113, when the control unit (CPU) 30 has received the selection information for both the mortuary and the funeral home chapel, the reserved chapel number and its date and time of use are displayed.

Thus, by employing the above-described configuration, the vacant statuses of both the mortuary and the funeral home chapel of the identical company can be known in the first call vehicle dispatch server according to Embodiment 2 of the present invention.

Therefore, when the user knows that both the mortuary and the funeral home chapel are vacant, the user can smoothly proceed the subsequent funeral schedule.

By employing the above-described configuration, the user can know the reservation status of the funeral home chapel of the company identical to that of the vacant mortuary in the first call vehicle dispatch server according to Embodiment 2 of the present invention. Therefore, the user can also expect the number of days to lay the corpse in the mortuary and the subsequent funeral schedule.

Furthermore, by employing the above-described configuration, the user can reserve the facilities both the mortuary and the funeral home chapel owned by the identical company in the first call vehicle dispatch server according to Embodiment 2 of the present invention.

Therefore, the user can confirm the funeral schedule.

In addition, by employing the above-described configuration, the company can know the operating state of the public facility in the area code in the first call vehicle dispatch server according to Embodiment 2 of the present invention.

Therefore, for example, by registering a company who does not own a first call vehicle as a user, the company can also reserve the public facility and request the dispatch of the first call vehicle.

The first call vehicle dispatch server of the present invention has been described above with the specific embodiments.

However, the present invention is not limited to them.

A person skilled in the art would be able to apply various changes and modifications to the configuration and the function of the present invention according to the above-described respective embodiments or other embodiments without departing from the technical scope of the present invention.

For example, the first call vehicle dispatch server according to Embodiment 1 of the present invention can be implemented with the following configuration, instead of waiting for the reception of the temporal selection information from the user terminal 5 in Step S133 in Fig. 15.

The configuration is, for example, that the first call vehicle dispatch server may receive the information of that the available first call vehicle has been temporarily selected in which the sum of the estimated fare from the location of the company of the vehicle to the request point and the estimated fare from the request point to the destination is minimum.

This configuration can make the user arrange the first call vehicle at a rational fare and more quickly.

The first call vehicle dispatch server according to Embodiment 1 of the present invention can also implemented with the following configuration.

In the configuration, between Step S132 and Step S133 in Fig. 15, , the estimated fares from the address of the company to the request point and the estimated fares from the request point to the destination are summed up for the available first call vehicle displayed on the user terminal 5, and those vehicles are attached a numeral with the ascending order of the sums, or the sums are displayed in list form in accordance with the ascending order of those vehicles in an additional information column beside the map.

This configuration can make the user arrange the desired first call vehicle at the rational fare.

Furthermore, according to Embodiment 1 of the present invention, the mortuary displayed on the screen of the user terminal 5 is selected in Step S112 in Fig. 12.

However, an alternative configuration may be implemented so as to inquire the user if there is a predetermined facility before Step S112.

For example, the funeral might be performed at the home of the deceased, an assembly hall of a neighborhood association, or the like.

In a case that the funeral will be performed at the facility not displayed, the user may, for example, directly click on the destination on the map, or directly input the address or the facility name with the keyboard.

This configuration makes the user arrange the mortuary flexibly for the corpse, and enables to correspond just for the dispatch request of the first call vehicle.

In addition, according to Embodiment 1 of the present invention, in Step S33 and Step S52 in Fig. 8, when there is a change in the current facility state and vehicle state, the facility state and the vehicle state are updated and stored by rewriting them.

Here, the facility state and the vehicle state may be set to, for example, "00 (vacant or available)," "01 (vacant or available in one hour)," "10 (vacant or available in two hours)," "11 (in use or occupied)" using two-bit flag information.

Then, in Step S96 in Fig. 10, the facility state and the vehicle state will be displayed on the company terminal 4 and the user terminal 5 by changing colors depending on the above-described states.

For example, by expanding a range of selection of the mortuary and the first call vehicle by indicating the state with blue in case of "00 (vacant or available)," green in case of "01 (vacant or available in one hour)," yellow in case of "10 (vacant or available in two hours)," and the like, the user can dispatch the first call vehicle more flexibly.

According to Embodiment 1 of the present invention, in Step S143, the control unit (CPU) 30 ends the vehicle dispatch instruction means 306 after executing the instruction on the company terminal 4.

Here, for example, the control unit (CPU) 30 may continuously receive the GPS information from the company terminal 4 until the first call vehicle dispatched arrives at the request point, and display the location of this vehicle on the display screen of the user terminal 5 based on the received GPS information.

The first call vehicle dispatch server according to Embodiment 2 of the present invention can also implemented with the following configuration.

In the configuration, as directly illustrated in Fig. 25, as the exemplary screen displayed on the user terminal 5 in Step S113 in Fig. 12, in addition to the facility reservation overview in the calendar format and the vacant status per funeral home chapel on the temporarily selected date, the vacant status per mortuary on the temporarily selected date is displayed beside the map on the screen.

This ensures the reservations in either or both the mortuary and the funeral home chapel on the desired date.

The first call vehicle dispatch server according to Embodiment 2 of the present invention, can also allow the public facility to use the company terminal.

This will quickly reflect the reservation status of the public facility, and make the facility reservation more reliable.

In the first call vehicle dispatch server according to the embodiment of the present invention, in the layout of the exemplary screen displayed on the company terminal 4 and the user terminal 5, an information area that displays various kinds of information is disposed on the right side of a map display area.

Here, the information area is not limited to this.

The information area may be on the left side of the map display area or both right and left of the map display area.

A shape of the displayed screen need not be in landscape format.

The screen shape may be in portrait format, and the information area may be disposed above, below, or above and below the map display area.

The first call vehicle dispatch server of the present invention is also ensured by a program to cause the computer to function as the first call vehicle dispatch server.

This program may be stored in a computer-readable storage medium.

The storage medium recorded with this program may be ROM itself of the first call vehicle dispatch server illustrated in Fig. 2, or may be a CD-ROM or the like that can be read out, when a program reading device such as a CD-ROM drive is provided as an external memory, by inserting therein the storage medium.

The above-described storage medium may be a magnetic tape, a cassette tape, a flexible disk, a hard disk, MO/MD/DVD and the like, or a semiconductor memory.

All publications, patents, and patent applications cited in this description are incorporated herein by reference in their entirety.

The disclosure of Japanese Patent Application No. 2017-155528 filed on August 10, 2017 including its description, claims, and drawing is incorporated herein by reference in their entirety.

### [REFERENCE SIGNS LIST]

- 1:: First call vehicle dispatch system
- 2:: Internet
- 3:: First call vehicle dispatch server
- 4:: Company terminal
- 5:: User terminal
- 6:: Facility reservation server
- 30:: Control unit (CPU)
- 31:: Storage unit
- 32:: Bus lines
- 33:: Input unit
- 34:: Display unit
- 35:: Communication unit
- 300:: Authentication means
- 301:: Management information registration means
- 302:: Facility state rewrite means
- 303:: Vehicle state rewrite means
- 304:: State display means
- 305:: Facility reservation means
- 306:: Vehicle dispatch instruction means
- 307:: Fare settlement means
- 310:: Program storage
- 311:: Various tables
- 312:: Company management information
- 313:: Employee management information
- 314:: User management information
- 315:: Vehicle state information
- 316:: Facility state information
- 317:: Request route information
- 318:: Map information
- 319:: Public facility management information
- 3120:: Identification code
- 311A:: Region table
- 311B:: Area table
- 311C:: Type table
- 311D:: Facility table

## Claims

1. A first call vehicle dispatch server comprising:
a vehicle state storage means that stores a vehicle state representing whether a first call vehicle is available or not as vehicle state information;
a facility state storage means that stores a facility state representing whether a mortuary is vacant or not as facility state information;
a state display means that transmits information regarding an available first call vehicle and information regarding a vacant mortuary to a user terminal based on the vehicle state information and the facility state information, and displays the information regarding the available first call vehicle and the information regarding the vacant mortuary on the user terminal; and
a vehicle dispatch instruction means that receives vehicle selection information that selects an available first call vehicle associated with the displayed vacant mortuary from the user terminal, and instructs a dispatch of the selected first call vehicle based on the vehicle selection information.

2. The first call vehicle dispatch server according to claim 1, further comprising:
a facility reservation means that receives facility selection information that selects a vacant mortuary associated with the first call vehicle instructed to be dispatched from the user terminal, and reserves the selected vacant mortuary based on the facility selection information.

3. The first call vehicle dispatch server according to claim 1, wherein
the state display means displays the information regarding the available first call vehicle and the information regarding the vacant mortuary on a map on a screen of the user terminal.

4. The first call vehicle dispatch server according to claim 2, wherein
the facility reservation means receives facility temporal selection information that temporarily selects a vacant mortuary from the user terminal, and displays facility state information representing whether a funeral home chapel owned by a company of the temporarily selected mortuary is vacant or not on the user terminal based on the facility temporary selection information.

5. The first call vehicle dispatch server according to claim 4, wherein
the facility reservation means includes a facility reservation status display means that displays a reservation status of the funeral home chapel owned by the company of the temporarily selected mortuary on the user terminal based on the facility temporary selection information.

6. The first call vehicle dispatch server according to claim 5, wherein
the facility reservation means reserves, when the facility reservation means receives temporal selection information that temporarily selects a vacant funeral home chapel displayed by the facility reservation status display means and further receives selection information for the temporarily selected mortuary, both the temporarily selected vacant funeral home chapel and the mortuary for which the selection information has been received.

7. The first call vehicle dispatch server according to claim 1, wherein
the vehicle dispatch instruction means includes vehicle dispatch information display means that receives vehicle temporal selection information that temporarily selects an available first call vehicle from the user terminal, and displays vehicle dispatch information representing a first estimated fare from a location of a company of the temporarily selected first call vehicle to a request point and a second estimated fare from the request point to the temporarily selected vacant mortuary for the temporarily selected first call vehicle based on the vehicle temporary selection information.

8. The first call vehicle dispatch server according to claim 1 or 6, wherein
the vehicle dispatch instruction means selects temporarily an available first call vehicle in which the sum of a first estimated fare from a location of a company of an available first call vehicle to a request point and a second estimated fare from the request point to the selected vacant mortuary is a minimum.
